# FASCICULE DE BREVET EUROPEEN

(11) **EP 3 607 673 B1**
(45) Date de publication et mention de la délivrance du brevet: **07.06.2023**
(21) Numéro de dépôt: 18712239.5
(22) Date de dépôt: 27.03.2018
(51) Int. Cl.: H04B 7/185, H04B 7/204

(54) **PROCEDE DE COMMUNICATION SPATIALE POUR DES SERVICES IOT ET SYSTEME SPATIAL DE TELECOMMUNICATIONS CORRESPONDANT**
VERFAHREN UND SYSTEM ZUM TRANSPORTIEREN VON SIGNALEN IN EINEM SATELLITENSYSTEM
METHOD AND SYSTEM FOR TRANSPORTING SIGNALS IN A SATELLITE SYSTEM

(30) Priorité: 04.04.2017 FR 1700359
(43) Date de publication de la demande: 12.02.2020
(73) Titulaire: Thales, 92400 Courbevoie (FR)
(72) Inventeur: GINESTE, Mathieu, 31100 Toulouse (FR); NIDDAM, David, 31100 Toulouse (FR); CHUBERRE, Nicolas, 31100 Toulouse (FR)
(74) Mandataire: Atout PI Laplace
(86) Numéro de dépôt international: PCT/EP2018/057698
(87) Numéro de publication internationale: WO 2018/184900

(56) Documents cités:
- EP-A1- 1 075 737
- EP-B1- 1 075 737
- WO-A1-01/65726
- FR-A1- 2 939 004

## Description

La présente invention concerne un procédé de communication pour des services loT et un système spatial de télécommunications à capacité élevée en termes de nombre de terminaux utilisateurs servis, apte à être intégré le cas échéant dans un système de radiocommunications à couverture cellulaire hiérarchique ordonnée.

La présente invention concerne également un module d'accès au réseau mobile spatial du système intégré de radiocommunications, ledit module d'accès étant intégré au niveau d'un relai spatial ou d'une station sol passerelle de connexion à l'infrastructure terrestre fixe.

Le domaine technique de l'invention concerne la mise en oeuvre de communications à bas débit par un système spatial incluant un très grand nombre de terminaux suivant un profil sporadique de trafic.

Un système « spatial » désigne ici et par la suite un système satellite utilisant comme relai(s) un ou plusieurs satellites évoluant sur une orbite géostationnaire GSO (en anglais GeoStationnary Orbit) ou sur des orbites non géostationnaires NGSO (en anglais Non Geostationnary Orbit) tels que des orbites basses LEO (en anglais Low Earth Orbit) ou des orbites circulaires intermédiaires MEO (en anglais Medium Earth Orbit), ou un système dit « HAPS » (en anglais « High Altitude Platform Station) utilisant comme relai(s) au moins une station-plateforme à altitude élevée.

Le système spatial, satellite ou HAPS, est éventuellement intégré dans un système intégré de radiocommunications à couverture cellulaire hiérarchique ordonnée, comme par exemple le système intégré de radiocommunications, décrit dans la demande de brevet français de N. Chuberre et al., intitulée « Système intégré de radiocommunications à couverture cellulaire hiérarchique ordonnée » et déposée le 7 avril 2016 sous le numéro de dépôt n°1600304.

L'un des enjeux de l'infrastructure des réseaux mobiles 5G, c'est-à-dire de cinquième génération, est d'augmenter la couverture de service et d'augmenter la ressource de transmission par rapport à celle des réseaux mobiles 2G, 3G ou 4G afin de pouvoir adresser des applications qui exigent une continuité de service sur une couverture globale, et éventuellement une grande fiabilité sur ladite couverture.

Parmi ces applications figurent en particulier les communications entre machines M2M (en anglais « Machine to Machine ») dans les domaines suivants :
.- les transports, pour le suivi et le contrôle à distance de marchandises acheminées par voie maritime, aérienne et/ou terrestre ;
.- le sécurité avec la surveillance d'infrastructures dites critiques telles que les réseaux de distributions d'eau ou d'énergie mais aussi les communications d'urgence ;
.- l'automobile connectée ; et
.- l'agriculture pour notamment la gestion du bétail.

Ces applications pour la plupart se caractérisent par un faible débit de service de type messagerie, et génèrent un trafic sporadique et fortement asymétrique, avec une bande passante sur la voie retour de service, c'est-à-dire depuis le terminal, utilisateur du service, vers la plateforme de service, largement supérieure à celle de la voie aller de service, c'est-à-dire depuis la plateforme de service vers le terminal utilisateur du service. Cependant ces applications peuvent nécessiter une voie aller pour des questions de gestion et contrôle des terminaux et de contrôle d'accès à la ressource.

L'enjeu est donc d'offrir une ubiquité de service à moindre coût et un temps de déploiement d'infrastructure du ou des réseaux de radiocommunications le plus rapide.

Les réseaux mobiles par satellite actuels sont connus pour offrir une couverture de service globale, bien adaptée pour adresser les zones de faible densité de population ainsi que les zones maritimes. La combinaison des réseaux mobiles satellitaires et terrestre est donc la solution naturelle pour fournir des systèmes de télécommunication qui garantissent une continuité de service et une disponibilité élevée à un coût optimisé d'investissement et d'opération de l'infrastructure de réseau.

Toutefois, les systèmes de télécommunications actuels ainsi formés présentent des limitations fortes en termes de nombre de terminaux pouvant être servis en parallèle. Pour des trafics très sporadiques, la mise en oeuvre d'une signalisation complexe et volumineuse telle qu'elle existe dans ces systèmes de télécommunications, par exemple dans des phases d'entrée dans le réseau satellite (en anglais « logon ») ou de basculement de trafic (en anglais « handover »), ne permet pas une mise à l'échelle qui répondrait aux besoins d'un nombre très conséquent de terminaux attendus dans les réseaux M2M/loT (en anglais « Machine to Machine/Internet of Thing »), de l'ordre du million voire davantage.

En outre, l'intégration actuelle des deux réseaux mobiles satellitaire et terrestre est réalisée par la conception et l'utilisation de terminaux portatifs bi-modes capables à la fois d'opérer
.- avec le réseau mobile satellite et le réseau cellulaire terrestre comme par exemple le font les terminaux portatifs bi-modes capable d'opérer avec les systèmes cellulaires terrestres GSM (en anglais « Global System for Mobile ») voire UMTS (en anglais « Universal Mobile Télécommunications System) et le système mobile par satellite Thuraya ; et
.- avec les composantes satellitaire et terrestre complémentaires d'un même système mobile satellite, dénommées en anglais « Ancillary Terrestrial Component », comme par exemple le font les terminaux bi-modes conçus pour les systèmes intégrés satellite et terrestre tels que « TerreStar » et « Lightsquared ».

Dans les deux cas, cela conduit à réaliser des terminaux spécifiquement adaptés au marché des systèmes mobiles satellitaires et intégrant une double chaîne de transmission/réception, chaque chaîne étant basée sur une interface radio, optimisée pour les caractéristiques respectives des systèmes satellitaire et cellulaire en termes de conditions de propagation radioélectriques.

Cependant, la taille du marché mobile satellite, estimée à quelques millions d'unités de terminaux, étant relativement restreinte en regard du marché mobile terrestre, estimée à quelques milliards d'unités de terminaux, n'incite pas les constructeurs de terminaux mobile satellite à diversifier leur gamme de produits, ni à chercher à réduire leurs coûts et/ou leurs tailles ou leurs encombrements.

Il est à remarquer que certaines tentatives ont été menées pour réutiliser dans le contexte d'un réseau mobile satellite une interface radio conçue initialement pour un système cellulaire terrestre mobile. Cependant les caractéristiques et le faible degré de flexibilité offerts par les interfaces radio 2G (GSM), 3G (WCDMA) lou 4G (LTE) ont conduit à une sous-optimisation des performances dans le contexte du réseau mobile par satellite.

En outre, l'opération dans les bandes de fréquence allouées au réseau mobile satellite, c'est-à-dire la bande de fréquence MSS (en anglais Mobile Satellite Service) nécessite dans le terminal l'ajout d'un étage radiofréquence RF spécifique supplémentaire.

De manière générale, les solutions actuelles connues à double mode (dénommée en anglais dual mode) ou plus (multiple mode) permettant avec un terminal dédié de communiquer alternativement au travers d'au moins un réseau cellulaire terrestre et du réseau satellitaire, impliquent l'ajout de constituants matériels spécifiques pour la communication par satellite incluant par exemple une antenne et/ou une chaîne de radiocommunication et/ou des capacités de traitement supplémentaires.

Ces solutions connues sont satisfaisantes pour adresser le marché satellitaire actuel mais ne permettent pas une utilisation large échelle de terminaux très bas débit par satellite.

En conséquence, un premier problème technique général est de fournir un système spatial de télécommunications pour des services loT, apte à être intégré dans un système de radiocommunications à couverture cellulaire hiérarchique ordonnée, et un procédé correspondant de mise en oeuvre des radiocommunications, pour lesquels un nombre de terminaux, plus grand que celui des systèmes spatiaux actuels de télécommunications, peuvent utiliser une ressource satellite limitée en prenant en compte le fait que les terminaux ont chacun une communication très sporadique et potentiellement bidirectionnelle et asymétrique avec un trafic plus important sur la voie montante, le fait que le trafic est non uniforme par zone, des zones très denses dénommées « hot-spots » en anglais pouvant exister, que la position des terminaux est à priori inconnue avant l'établissement d'une communication, et le fait que le matériel (dénommé en anglais « hardware ») utilisé par le terminal peut être le même ou très similaire pour l'accès satellite et l'accès terrestre.

Un deuxième problème technique, connexe au premier problème technique, est de fournir des terminaux de radiocommunications, ayant un profil de communication à très bas débit et sporadique, dont l'architecture matérielle et logicielle permet auxdits terminaux
.- d'accéder en très grand nombre à un système spatial sur une ressource satellite limitée pour des services ayant un trafic très sporadique, typiquement des services M2M/IoT, et donc d'assurer une continuité de service avec les réseaux terrestres; et
.- optionnellement d'assurer une continuité de service en tant que terminaux cellulaires terrestres pour des communications bas débit concernant des services tels que la messagerie, la voix, etc., initiées dans un réseau cellulaire terrestre ou satellite, lesdits terminaux utilisant dans ce cas les ressources matérielles d'un terminal développé pour fonctionner dans les réseaux cellulaires terrestres ou équivalent, sans aucun ajout matériel lié à la communication par satellite.

On connaît du document FR 2 939 004 A1, un procédé de communication d'un terminal mobile dans un système satellite multifaisceau basé sur un multiplexage par répartition orthogonale de fréquence (OFDM) réutilisant la même bande de fréquences pour tous les faisceaux.

On connaît aussi du document EP 1 075 737 A1, un procédé d'alignement d'un terminal d'utilisation au niveau d'un système de télécommunication comprenant plusieurs émetteurs/récepteurs de signaux de satellite, à faisceau en pinceau, définissant chacun un faisceau en pinceau respectif.

A cet effet, l'invention a pour objet un procédé de communication spatiale tel que décrit dans les revendications 1 à 16.

L'invention a également pour objet un système de télécommunications spatial tel que décrit dans les revendications 17 à 22.

L'invention a également pour objet un système intégré de télécommunications selon la revendication 23.

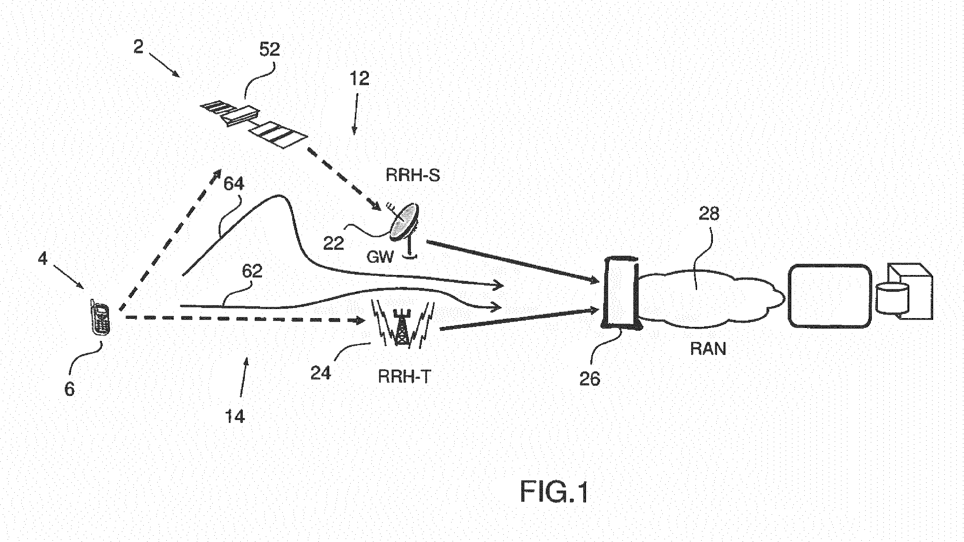

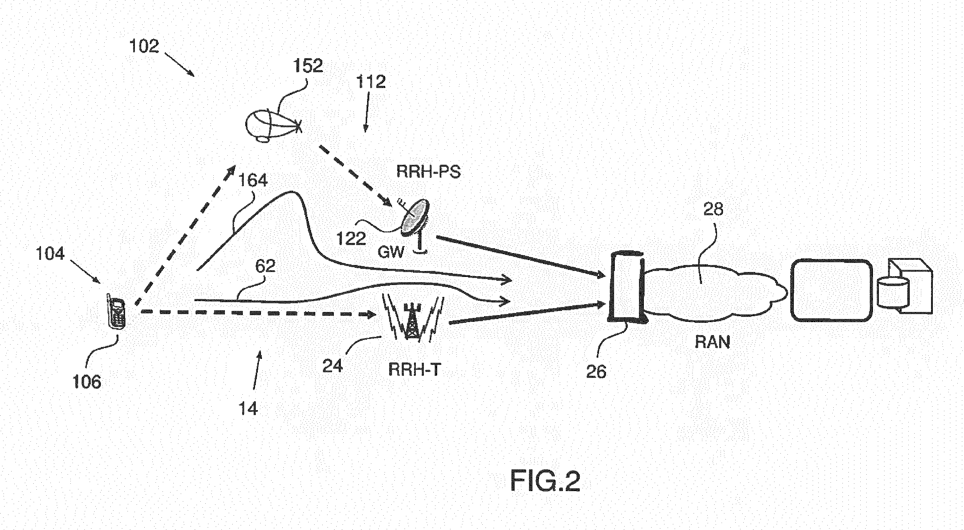

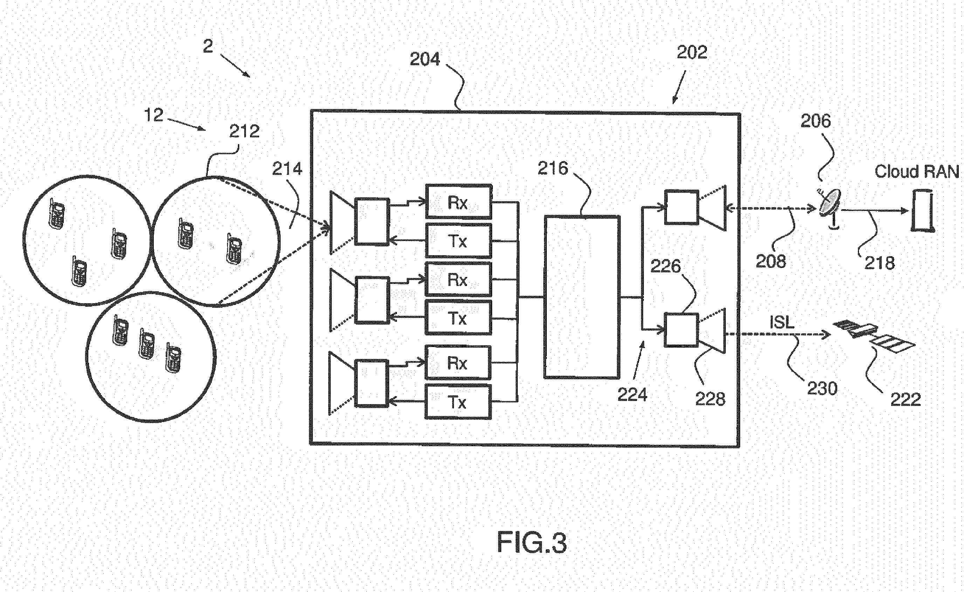

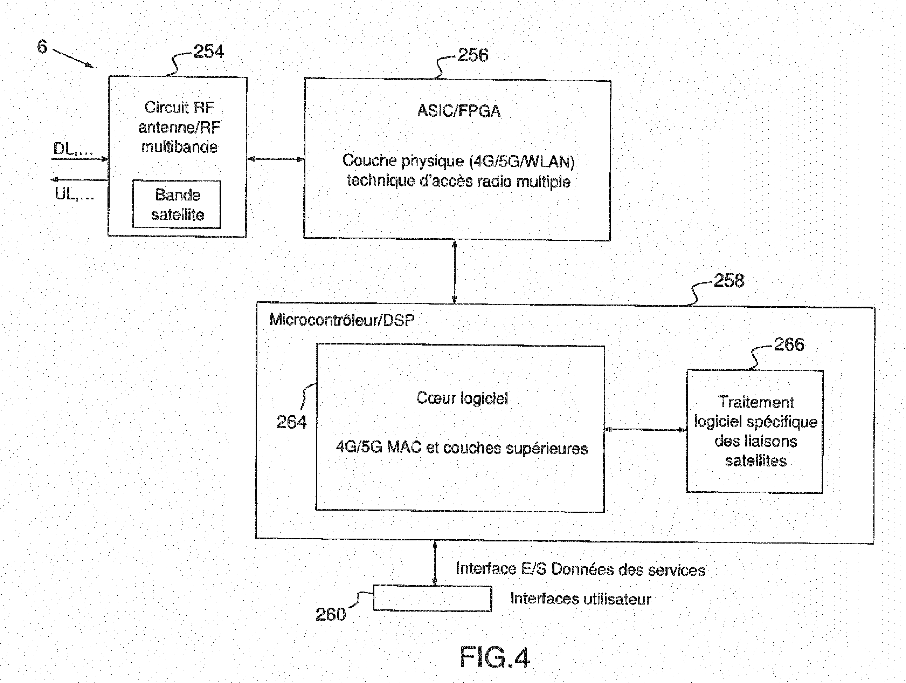

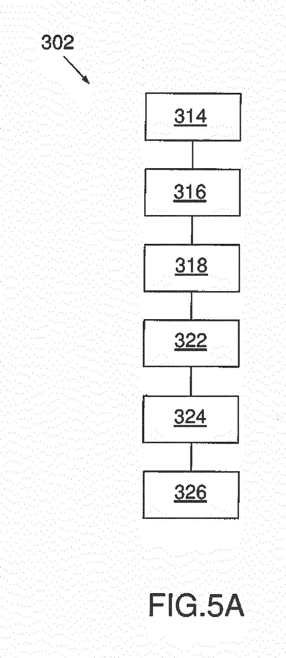

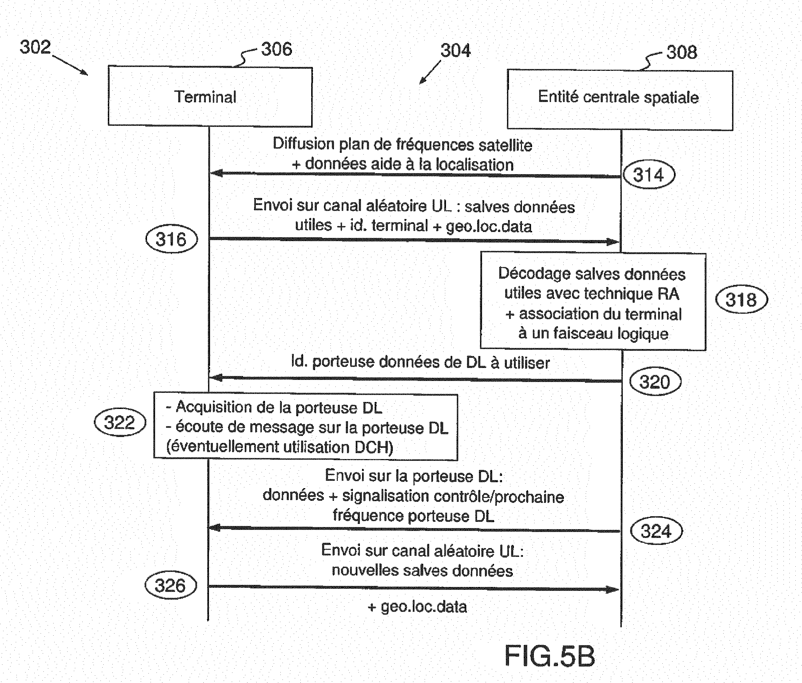

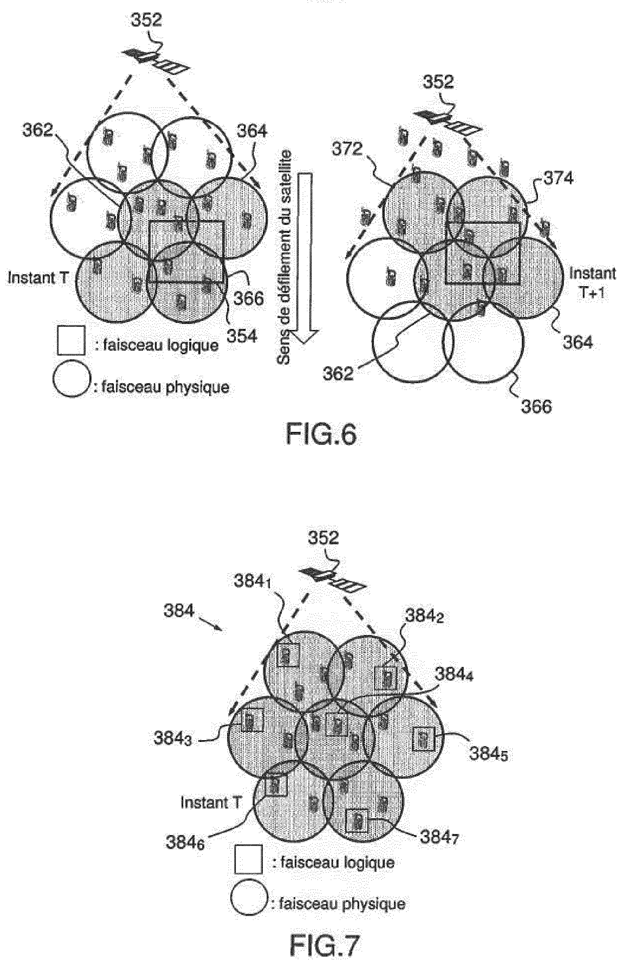

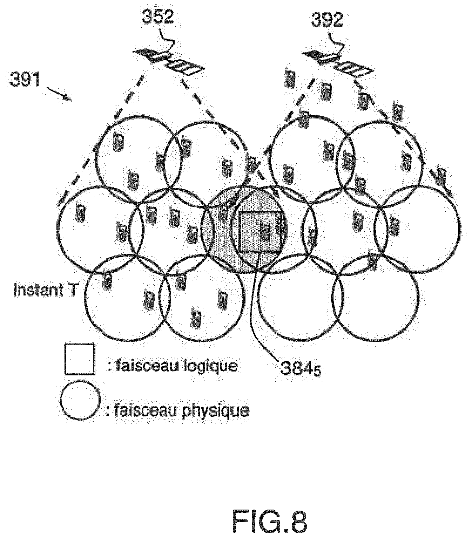

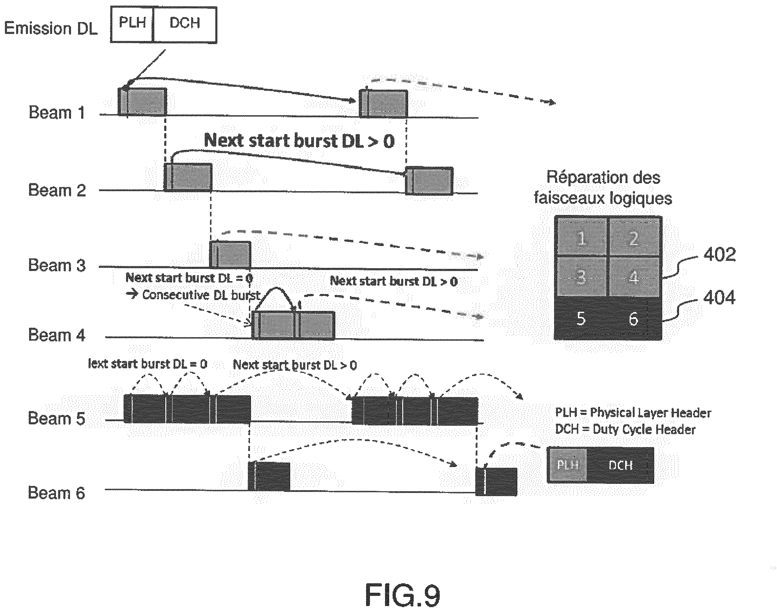

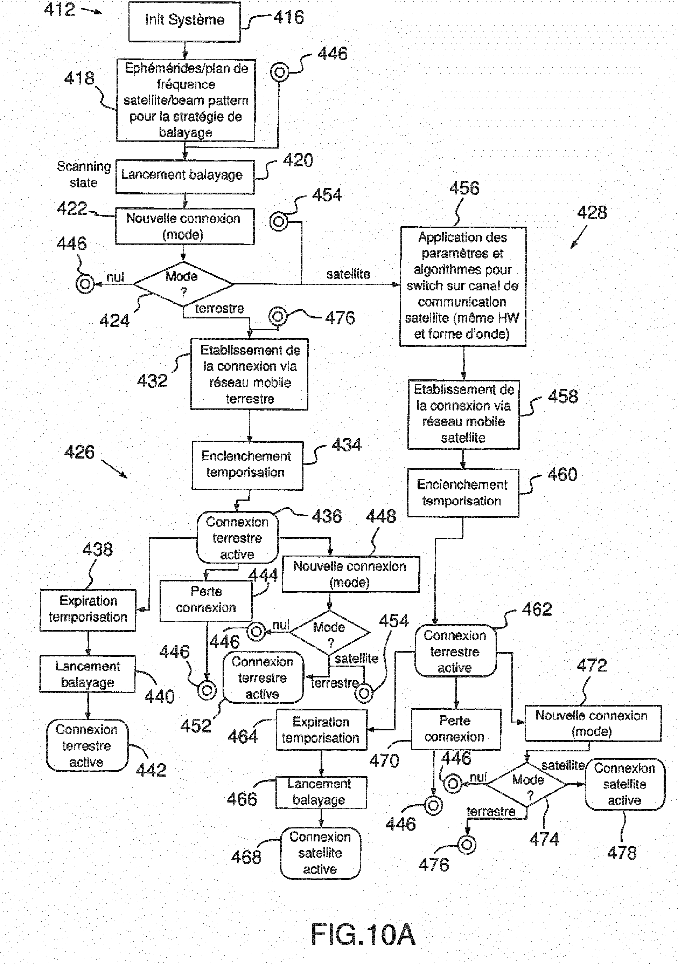

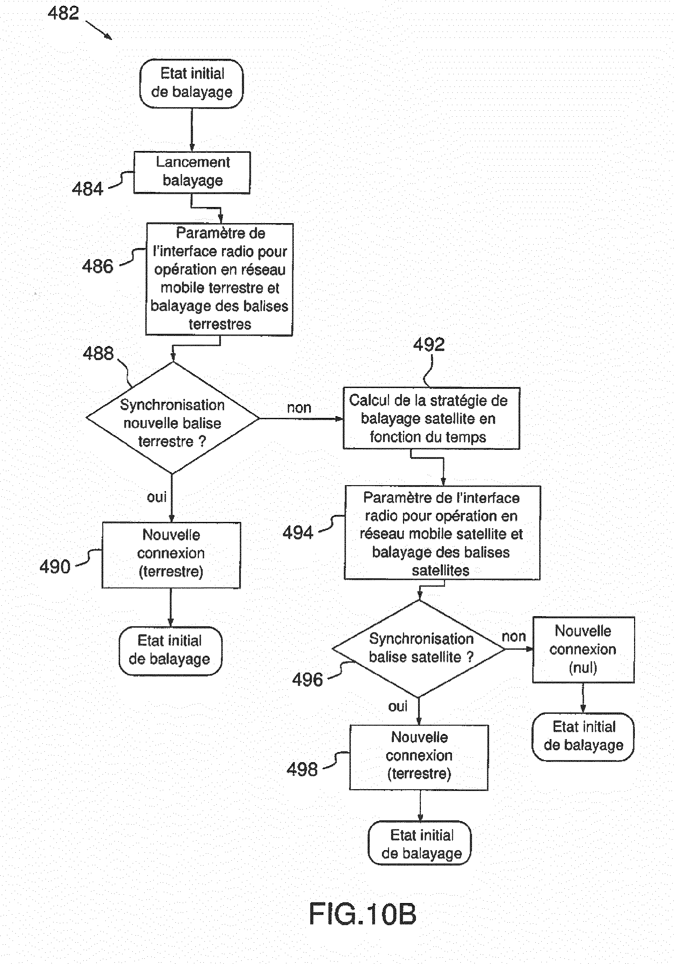

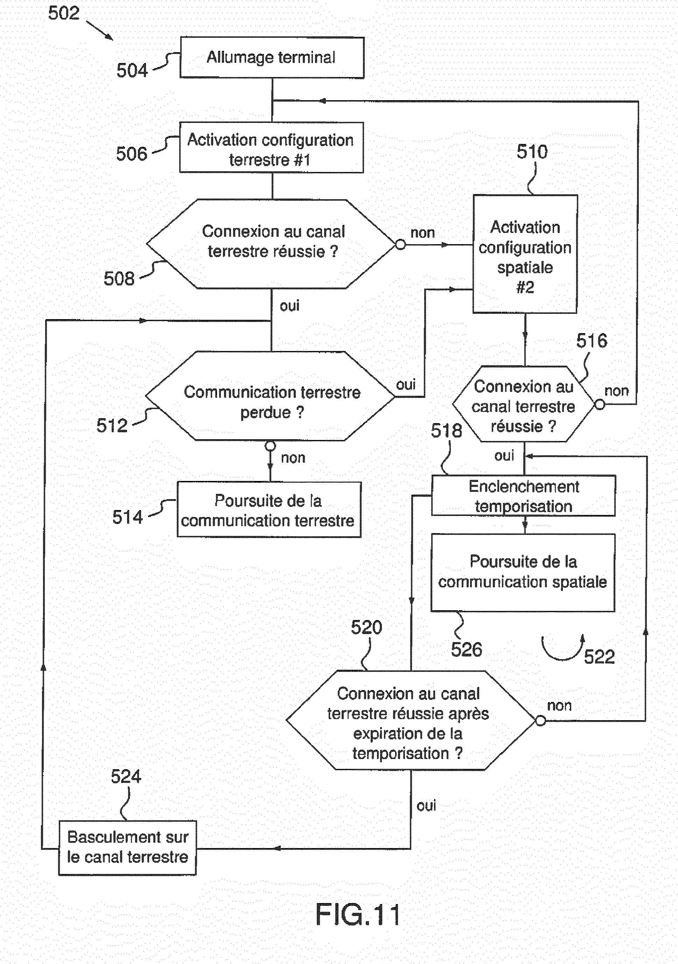

L'invention a également pour objet un module d'accès tel que décrit dans les revendications 24 et 25. L'invention sera mieux comprise à la lecture de la description de plusieurs formes de réalisation qui va suivre, donnée uniquement à titre d'exemple et faite en se référant aux dessins sur lesquels :
.- la Figure 1 est une vue schématique d'un premier mode de réalisation d'un système spatial de radiocommunications selon l'invention, intégré dans un exemple de système de radiocommunications à couverture cellulaire hiérarchique ordonnée ;
.- la Figure 2 est une vue schématique d'un deuxième mode de réalisation d'un système spatial de radiocommunications selon l'invention, ici intégré dans un exemple de système de radiocommunications à couverture cellulaire hiérarchique ordonnée ;
.- la Figure 3 est une vue du système de la Figure 1 qui détaille l'architecture du satellite formant ici le relai spatial du système spatial ;
.- la Figure 4 est une vue de l'architecture d'un terminal multi-mode selon l'invention intégrant jusqu'à la couche physique la mise en oeuvre de communication(s) d'au moins un réseau cellulaire terrestre et du système spatial selon l'invention ;
.- la Figure 5A est un ordinogramme d'un procédé de communication selon l'invention mis en oeuvre par un système spatial de télécommunications selon l'invention comme par exemple celui décrit dans les Figures 1 et 2 ;
.- la Figure 5B est une vue d'un diagramme temporel des signaux échangés lors de l'exécution du procédé de communication spatiale de la Figure 5A entre un terminal utilisateur du système spatial et de la passerelle spatiale de connexion GW (en anglais gateway) au réseau fixe de communications de la Figure 1, lors d'un établissement ou du maintien d'une communication spatiale;
.- la Figure 6 est une vue du principe de fonctionnement d'un premier mode de réalisation d'un faisceau logique vis-à-vis des faisceaux physique lors d'un basculement entre faisceaux physiques causé par le défilement d'un satellite ;
.- la Figure 7 une vue du principe de fonctionnement d'un deuxième mode de réalisation d'un faisceau logique vis-à-vis des faisceaux physiques d'un même satellite ;
.- la Figure 8 est une vue du principe de fonctionnement du deuxième mode de réalisation d'un faisceau logique de la Figure 8 vis-à-vis des faisceaux physiques de deux satellites le recouvrant à un instant donné ;
.- la Figure 9 est une vue de la signalisation DCH (en anglais « Duty Cycle Header ») de lien descendant DL envoyée par un satellite à des terminaux appartenant à des faisceaux logiques différent et permettant la mise en oeuvre d'une stratégie d'économie d'énergie électrique de l'ensemble des terminaux ;
.- la Figure 10A est un ordinogramme détaillé d'un exemple d'algorithme permettant le basculement d'une communication entre un système cellulaire terrestre et un système spatial en fonction de la disponibilité de chacun des canaux de transmission associés auxdits système et d'une stratégie particulière de sélection d'un système parmi les deux ;
.- la Figure 10B est un ordinogramme détaillé d'un algorithme utilisé par une étape du procédé de basculement de la Figure 10A, ladite étape permettant l'évaluation de la disponibilité des deux systèmes terrestre et satellite et la réalisation de la stratégie de sélection ;
.- la Figure 11 est un ordinogramme simplifié de l'ordinogramme de la Figure 10A.

Suivant un premier aspect de l'invention qui vise à augmenter le nombre de terminaux servis sur une ressource donnée du système spatial, un premier concept sous-jacent de l'invention est de limiter de manière très conséquente la signalisation, utilisée et gérée classiquement par des terminaux ayant un trafic soutenu mais également par ceux ayant un trafic sporadique et de bas débit, comme par exemple le trafic d'applications M2M/SCADA (en anglais Supervisory Control and Data Acquisitions) par satellite, et de mettre en oeuvre une gestion des ressources entièrement centralisée au niveau de la station d'accès GW en limitant significativement la signalisation, émise depuis et reçue par le terminal, et en en se fondant sur les salves ou rafales de données, émises par le terminal sur la voie retour depuis le terminal vers la station d'accès GW, et sur quelques informations de signalisation en nombre faible pour gérer les phases suivantes, consommatrices de signalisation dans les systèmes classiques :
.- la gestion du basculement d'une communication entre un réseau terrestre et un réseau spatial (dénommé en anglais « handover ») ou de l'entrée dans le système spatial réalisée avec de la signalisation dans la bande (in-band) allouée à la liaison montante UL du système satellite, l'enregistrement du terminal étant réalisé dans un réseau cellulaire terrestre du système intégré ou dans le réseau spatial ;
.- la gestion de basculements entre faisceaux physiques (en anglais inter-beams handover) d'un même satellite transparents pour l'utilisateur et sans signalisation ;
.- la gestion de basculements entre faisceaux physiques de deux satellites différents (il sera alors fait référence à un basculement entre satellites dénommé en anglais inter-satellite handover).

Pour mettre en oeuvre le premier concept décrit ci-dessus, un deuxième concept sous-jacent de l'invention est d'associer des terminaux utilisateurs à des « faisceaux logiques » (en anglais dénommés « logical beams ») à chaque salve de données émise par les terminaux, les faisceaux logiques étant définis par un maillage de zones géographiques fixes, qui sans jamais se recouvrir même partiellement, forment la couverture globale du système spatial. Chaque faisceau logique est caractérisé par une zone géographique différente et est associé en temps réel à une pluralité de faisceaux physiques du relai spatial (satellite ou plateforme HAPS) qui recouvrent ledit faisceau logique.

Les faisceaux logiques permettent d'éviter toute gestion de basculement (en anglais « handover ») de communication pour le terminal et de signalisation associée. L'association d'un terminal à un faisceau logique et l'association des ressources de transmission vers ce faisceau logique sont gérées au niveau de la station d'accès du réseau spatial ou d'une unité centralisée de niveau supérieur de l'infrastructure d'un système intégré, en se fondant sur les messages de données transmis par le terminal. Ainsi le terminal peut être joint à tout instant, ce qui permet de lui transmettre des données ou des informations de contrôle, notamment de contrôle de flux et de congestion, pour améliorer les performances et éviter l'effondrement de l'accès au système satellite.

Une bande de fréquence BUL unique de lien montant UL, composée d'un ensemble de fréquences porteuses, est utilisée dans le système spatial de manière à ne pas avoir à faire d'allocation spécifique par terminal.

Une fréquence fDL de lien descendant est utilisée par relai spatial pour un ensemble de terminaux situés dans le même faisceau logique afin de leur transmettre des données ou des informations de contrôle sans basculement de faisceau physique.

Ainsi est obtenue une réduction significative du coût de signalisation (en anglais « overhead ») qui est indépendant du niveau de protocole dans lequel la signalisation est incluse, ce qui appréciable dans le cas d'un trafic sporadique pour lequel la part de la signalisation est très importante, plus importante que la part du trafic lui-même. En conséquence, le nombre de terminaux pouvant utiliser une ressource donnée de transmission du système spatial va être grandement accru.

Suivant un deuxième aspect de l'invention qui vise dans un contexte 5G à accroitre l'intégration du service mobile spatial (par satellite ou station HAPS) avec le service mobile « terrestre » ou « cellulaire » sans impacter les constituants matériels des terminaux de nouvelle génération, un troisième concept sous-jacent de l'invention est de configurer de façon logicielle tant les paramètres RF de la plateforme matérielle du terminal que le protocole de l'interface radio, par exemple le protocole NB-loT ou Narrow Band Internet of Things en cours de normalisation au 3GPP pour permettre une opération par satellite.

En effet le contexte 5G offre cette opportunité d'intégration accrue du service mobile par relai spatial avec le service mobile "terrestre" ou "cellulaire" sans impacter les constituants matériels des terminaux de nouvelle génération, en raison des faits suivants :
.- d'une part la conception et le développement actuels d'interface(s) radio offrant des caractéristiques compatibles des bilans de liaison d'un réseau satellite mobile, en particulier la possibilité de configurer la largeur de bande des canaux, notamment la possibilité de la réduire sur la voie montante à quelques kilohertz, ce qui sera également permis par le protocole de transport du fait d'une normalisation d'accès à bande étroite (en anglais « narrow band ») applicable pour la transmission des services loT (NB-loT);
.- d'autre part, une grande partie des terminaux cellulaires seront dotés dans un futur proche d'un étage radio logicielle leur permettant d'opérer dans les bandes multiples allouées au service mobile par exemple dans la gamme de fréquence 900 à 2500 MHz.

Suivant la Figure 1 et un premier mode de réalisation, un système intégré 2 de télécommunications comporte un ensemble 4 de terminaux utilisateurs multi-modes 6 selon l'invention compatibles d'un ou plusieurs systèmes cellulaires terrestres et assimilés, et d'un système spatial selon l'invention, un système spatial satellite 12 multifaisceaux selon l'invention, et un système cellulaire terrestre 14. Ici, pour simplifier la Figure 1, un seul terminal utilisateur 6 est représenté.

Dans les deux composantes spatiale et cellulaire terrestre 12, 14 du système intégré 2, l'architecture connue des stations de base, dénommées en anglais « e-Node B » et des contrôleurs de réseau d'accès radio RAN (en anglais « Radio Accès Radio ») est modifiée.

L'étage radio et le système d'antenne de chacune des stations de base sont désormais associés à des fonctions de conversion numérique dans une entité dénommée de manière générique tête radio distante RRH (en anglais « Remote Radio Head ») et plus spécifiquement RRH-S 22 pour la composante satellite 12 et RRH-T 24 pour la composante cellulaire terrestre 14 représentée.

Chaque tête radio distante RRH 22, 24, est raccordée aux fonctions modem, c'est-à-dire démodulation, décodage, codage, et modulation, regroupées au niveau d'une entité 26 de contrôle du réseau d'accès radio de Cloud 28, désigné par « Cloud » RAN ou C-RAN, capable de traiter les signaux de plusieurs RRH réparties sur une zone de couverture. Une telle architecture permet d'exploiter au maximum les techniques de diversité ou techniques MIMO (en anglais « Multiple Input Multiple Output) pour optimiser l'efficacité spectrale, la qualité de service QoS et la capacité du réseau En outre les C-RAN peuvent échanger entre elles des informations afin de combiner des signaux radiofréquences RF collectés par différentes tête radio distantes RRH adjacentes ou immédiatement proches mais situés à la frontière entre deux zones contrôlés par des C-RAN distinctes.

Le système intégré 2 est configuré pour fournir notamment des services de communications bas débit unidirectionnels pour des applications de type communication entre machines avec des terminaux de très grande autonomie.

La composante spatiale ou le système spatial 12, considérée comme un premier système du système intégré, est configuré pour fonctionner dans les mêmes bandes de fréquence que les réseaux cellulaires, considérés comme des deuxièmes systèmes, par exemple en bande UHF, L, S ou C étendue, sans créer des interférences ou des brouillages sur le ou les réseaux cellulaires terrestres. Le système satellitaire 12 constitue une composante du système intégré 2 qui permet une extension de la couverture des réseaux ou systèmes cellulaires terrestres.

Le système satellitaire 12, basé ici sur des satellites 52 par exemple non stationnaires NGSO, est configuré pour recevoir les signaux transmis par les terminaux cellulaires 6 dans une zone donnée et de les retransmettre aux C-RAN dans le même format que celui utilisé par les RRH terrestres.

Typiquement, le système satellitaire 12 selon l'invention est configuré au travers de ses satellites pour générer un ensemble de faisceaux dont l'empreinte constitue un ensemble de cellules spatiales ou satellitaire.

Les signaux transmis par tous les terminaux situés dans une cellule satellitaire sont donc collectés par un satellite 52 du système satellitaire 12 et retransmis en diffusion vers l'ensemble des têtes radio distantes satellitaires RRH-S 22 répartis dans cette cellule satellitaire. Le C-RAN 32 ou les C-RAN rattachés aux RRH terrestres (RRH-T) 24 et aux RRH satellitaires (RRH-S) 22 de la cellule satellitaire sont configurés pour combiner les signaux collectés au travers des divers RRH terrestres ainsi que ceux collectés par satellite au travers de l'au moins une RRH satellitaire en tenant compte de la différence de délais entre deux chemins d'acheminement 62, 64 des signaux au C-RAN 26, un premier chemin 62 transitant par une RRH-T terrestre 24 et un deuxième chemin 64 transitant par une RRH-S satellitaire 22.

Dans une cellule satellitaire ayant une forte densité de têtes radio distantes terrestres RRH-T, la contribution ajoutée par la composante satellitaire est faible car le C-RAN dispose dans ce cas de nombreuses composantes terrestres via les RRH-T d'un signal transmis par un terminal cellulaire. Toutefois en cas de surcharge des composantes terrestres, la contribution apportée par la composante satellitaire au travers de sa couverture parapluie apparaît très utile.

Dans une cellule satellitaire ayant une faible densité de têtes radio distantes terrestres RRH-T, par exemple dans une zone rurale, la composante satellitaire permet de compléter sans couture la couverture d'une ou plusieurs composantes cellulaires terrestres.

Dans une cellule satellitaire ne disposant d'aucune tête radio distante ni satellitaire ni terrestre, par exemple dans une zone isolée désertique ou maritime, la composante satellitaire est l'unique moyen de collecter les signaux transmis par les terminaux cellulaires. Elle sera relayée par une plusieurs liaisons inter-satellite ISL (en anglais Inter Satellite Link) jusqu'à une tête radio distante satellitaire RRH-S située dans une autre cellule satellitaire.

La tête radio distante satellitaire RRH-S 22 du système spatial 12 selon l'invention intègre en plus d'un modem e-NodeB (4G/5G) des mécanismes d'accès spécifiques qui permettent d'optimiser la réception des messages transmis sur le canal de communication satellitaire.

Ici, la tête radio-distante satellite RRH-S 22 est intégré au sol, c'est-à-dire une passerelle GW, le satellite 52 étant supposé transparent.

En variante, le satellite 52 est régénératif et la tête radio-distante satellite RRH-S est intégrée à bord du satellite.

En variante, le système spatial n'est pas intégré dans un système de radiocommunications à couverture cellulaire hiérarchique ordonnée et constitue un système de télécommunications autonome qui comporte une ou plusieurs tête radio distante satellitaire intégrant en plus d'un modem de raccordement à l'infrastructure terrestre des mécanismes d'accès spécifiques permettant d'optimiser la réception des messages transmis sur le canal de communication satellitaire.

Suivant la Figure 2 et un deuxième mode de réalisation, un système intégré 102 de télécommunications comporte des éléments identiques ceux du système intégré 2 de télécommunications de la Figure 1, portant les références numériques 14, 24, 26, 28.

Le système intégré 102 diffère du système intégré 2 de la Figure 1 en ce que le système spatial satellite 12 multifaisceaux et la tête radio satellite RRH-S 22 sont respectivement remplacés par un système spatial HAPS 112 multifaisceaux utilisant comme plateforme(s) relai au moins une plateforme à altitude élevée HPAS 152 et une tête radio distante HAPS-HRPS 122, adaptée aux liaisons entre un terminal utilisateur et une plateforme HAPS.

En outre, le système intégré 102 est différent en ce qu'il comporte un ensemble 104 de terminaux multi-modes ayant un degré élevé d'intégration et capables de gérer l'interface avec un réseau mobile spatial de type HAPS.

Ici, le chemin de signaux transitant via la plateforme HAPS 152 jusqu'au C-RAN 26 est désigné par la référence numérique 26.

Suivant la Figure 3 et une architecture typique d'une station relai satellite 252 du système satellite 12 multifaisceaux de la Figure 1, intégré dans le système intégré 2, la station relai satellite 202 comporte un satellite 204 et au moins une tête radio distante satellite RRH-S 206, connectée au satellite 204 au travers d'une liaison bidirectionnelle 208 d'accès au réseau de l'infrastructure terrestre.

La station relai satellite 202 est configurée pour numériser un agrégat de signaux provenant d'une même cellule satellitaire 212 et reçus dans un faisceau associé 214 de première voie montante du satellite 204 et générer un flux de données vers les C-RAN au même format que les RRH.

La numérisation peut se faire à bord du satellite 204 à l'aide d'un processeur numérique ou directement dans les têtes radio distante satellite RRH-S 206.

Le flux numérisé est mis à un format de radio numérisé sur fibre optique 218 D-RoF (en anglais « Digital Radio over Fiber) défini suivant des protocoles tels que CPRI (en anglais « Common Public Radio Interface ») ou OBSA (en anglais « Open Base Station Architecture Initiative »).

Le satellite 204 est configuré pour acheminer un agrégat de signaux provenant d'une même cellule satellitaire vers un autre satellite 222 au travers d'un canal transpondeur 224, connecté en sortie à un émetteur 226 et une antenne 228 de liaison inter-satellite 230, lorsque la cellule satellitaire est dépourvue de RRH comme par exemple dans le cas d'une couverture d'une zone maritime éloignée des côtes.

Suivant la Figure 4 et une architecture typique d'un terminal utilisateur intégré 6 du système satellite 12 multifaisceaux selon l'invention de la Figure 1, le terminal intégré 6 est configuré pour traiter et exploiter la même forme d'onde que celle utilisée par le système spatial et le système terrestre.

Le terminal utilisateur 6 est structurée matériellement pour pouvoir configurer de façon logicielle tant les paramètres RF de la plateforme matérielle du terminal que le protocole de l'interface radio, par exemple le protocole NB-loT ou Narrow Band Internet of Things en cours de normalisation au 3GPP pour permettre une opération par satellite.

Le terminal utilisateur 6 comprend un premier circuit radiofréquence RF254, incluant une antenne et des composants RF multi-bande, un deuxième circuit numérique 256 de type ASIC/FPGA pour traiter la couche physique (4G/5G/WLAN) et utilisant une technique d'accès radio multiple, et un troisième circuit numérique 258 de type microcontrôleur / DSP (en anglais Digital Signal Processor ») pour traiter la couche 4G/5G MAC (en anglais « Medium Acess Control ») et les couches supérieures des réseaux mobiles terrestres et traiter les protocoles des liaisons satellite selon l'invention.

Le terminal utilisateur 6 comprend également des dispositifs d'interfaces utilisateur/terminal 260, connectés par des liaisons bidirectionnelles au troisième circuit numérique 258.

Le premier circuit RF 254 est configuré, par l'ajout éventuel d'éléments de circuit RF spécifiques des liaisons satellite, pour pouvoir communiquer sur les bandes de service mobile satellite.

Il est également permis au terminal utilisateur 6 de mettre en oeuvre le protocole de transport, déjà implémenté dans les deuxième et troisième circuits numériques 256, 258 lorsque le terminal fonctionne en mode terrestre, et de remplir avec ce protocole de transport les exigences de la normalisation 5G d'accès à bande étroite (en anglais « narrow band ») applicable pour la transmission des services loT (NB-loT) dans la version actuelle la plus aboutie et celles à venir lorsque le système utilise le système spatial.

Le troisième circuit numérique comprend un coeur logiciel 264, formé d'instructions de programme et d'une base de données, configuré en relation avec le deuxième circuit numérique pour traiter les signaux échangés dans les canaux des réseaux cellulaires mobiles terrestres. Le coeur logiciel du troisième circuit numérique et le deuxième circuit numérique forment un étage de radio logicielle apte à opérer dans des bandes multiples allouées au service mobile, comme par exemple la gamme de fréquences 900 à 2500 MHz.

Les premier, deuxième et troisième circuits du terminal sont configurés au niveau matériel et au niveau logiciel pour permettre une configuration logicielle tant des paramètres RF de la plateforme matérielle du terminal que du protocole de l'interface radio, notamment le protocole NB-loT (en anglais Narrow Band Internet of Things), dans le cas d'une opération par satellite.

Cette configuration logicielle est réalisée par la mise en oeuvre de tout ou partie d'un ensemble 266 de modules logiciels supplémentaires, spécifiques du traitement d'une communication spatiale selon l'invention, et implantés, sous forme d'instructions et de données enregistrées, dans le troisième circuit numérique 258.

L'ensemble 266 des logiciels supplémentaires comprend :
.- un module logiciel pour sélectionner le mode d'opération satellite, cellulaire ou mixte ; ce module étant fondé sur un mécanisme de détection de la disponibilité des services et des ressources d'un système cellulaire terrestre et/ou du système mobile satellite et privilégiant en général l'utilisation d'un système cellulaire terrestre. Cette configuration diffère de la configuration d'un accès cellulaire classique comme le WIFI par exemple, dans le sens où un modem et une puce (en anglais chipset) unique sont utilisés ici pour communiquer sur un canal ou l'autre;
.- un module logiciel pour paramétrer la radio logicielle suivant un fonctionnement dans les bandes allouées au service mobile par satellite MSS (en anglais Mobile Satellite Service) ;
.- un module logiciel pour sélectionner la largeur de bande ou le nombre de porteuses en émission/réception adapté au canal satellite ;
.- un module de mise en oeuvre d'un algorithme spécifique d'accès à contention selon l'invention en particulier sur la voie montante avec la sélection des temporisations et du mode de transmission en fonction du type d'information à transmettre et adapté au canal de communication par satellite ;
.- un module de mise en oeuvre d'un algorithme spécifique de contrôle de puissance adapté au canal de communication par satellite ;
.- un module de mise en oeuvre d'un mécanisme spécifique de compensation Doppler adapté au canal de communication par satellite.

Cette configuration logicielle des terminaux décrite ci-dessus est permise en regard d'une architecture matérielle et logicielle d'une infrastructure satellite mobile qui lui correspond.

L'infrastructure satellite mobile comprend :
.- un segment spatial adapté, de préférence basé sur une constellation de satellites défilant en orbite basses LEO et offrant une faible latence compatible de certaines applications critiques, mais pouvant être également basé sur des satellites MEO, GEO et des plateformes relai à altitude élevée HAPS ;
.- de modems spécifiques dérivés des modems conçus pour les eNode B ou station de base 4G/5G. A l'instar des modems e-Node B, ce modem e-Node B de station d'accès GW (en anglais « Gateway ») est capable de s'interfacer avec les mêmes noeuds du réseau d'accès radio 4G/5G. Ce modem e-Node B GW implémente les fonctions suivantes :
   .* des mécanismes de compensation Doppler, de synchronisation et de boucle de contrôle de puissance adaptés au canal de communication par satellite ;
   .* un mécanisme pour générer la signalisation permettant aux terminaux d'accéder au réseau satellite ;
   .* un mécanisme pour acquérir, démoduler et décoder le signal transmis par les terminaux incluant des adaptations au canal satellite (temporisateurs) et des mécanismes PHY/MAC permettant la démodulation et le décodage de messages collisionnés (par exemple la suppression successive d'interférence,...) ;
   .* des modems qui peuvent être implantés à bord des satellite ou co-localisé avec les stations d'accès GW du segment sol de l'infrastructure satellite mobile.

Suivant les Figure 5A et 5B, un procédé de communication 302 selon l'invention utilise par exemple un des systèmes spatiaux 6, 106 des Figures 1 et 2, et comprend un ensemble d'étapes, exécutées successivement, dont certaines sont optionnelles.

Suivant la Figure 5B, un diagramme 304 des signaux échangés pendant le procédé de communication 302 entre un terminal 306 et une entité centrale 308 du système spatial ou module d'accès au système spatial, implantée soit au niveau du relai spatial (satellite ou plateforme HAPS) soit au niveau de la passerelle GW de connexion à l'infrastructure sol fixe, est décrite.

Le diagramme 304 met plus particulièrement en évidence la signalisation nécessaire pour la mise en oeuvre du procédé de communication 302 Les flèches en trait interrompu correspondent à un échange de signalisation et les flèches en trait continu correspondent à un échange de données utiles.

Suivant le diagramme 304, les étapes du procédé de communication spatial 302 selon l'invention sont exécutées dans un sens descendant qui correspond à un axe temporel d'écoulement du temps.

Suivant les Figures 5A-5B, dans une étape préalable 314 optionnelle, l'entité centrale du système spatial, c'est-à-dire le relai spatial ou la passerelle GW, émet un message de signalisation donnant des informations sur un plan de fréquences de la voie retour ou l'identifiant de ce plan et éventuellement des informations d'aide à la géo-localisation pour aider à la géo-localisation des terminaux. Ce message de signalisation est envoyé en continu sur l'ensemble de la couverture des satellites à une période donnée. La fréquence porteuse d'envoi de cette signalisation est supposée connue du terminal 306, qui a en mémoire un ensemble de fréquences porteuses de signalisation ou dispose d'un moyen de la découvrir. Le terminal 306 va ainsi tester l'ensemble des fréquences porteuses qu'il a en mémoire ou qu'il obtient en utilisant un autre moyen de découverte jusqu'à ce qu'il se synchronise, puis il récupère les informations de signalisation transmises dans le premier message de signalisation. Le terminal 306 peut également utiliser cette étape pour réaliser une correction grossière de synchronisation de son oscillateur local et une prise en compte grossière de la dérive doppler sur la porteuse de signalisation reçue pour compenser ces erreurs lors de l'émission à venir.

Cette étape préalable 314 peut être omise lorsque le terminal 306 dispose d'un moyen de géo-localisation propre, autonome vis à vis du système spatial de radiocommunications, comme par exemple un récepteur GNSS (en anglais « Global Navigation Satellite System ») et connait déjà a priori le plan de fréquences de la voie retour, c'est-à-dire du lien montant UL, à utiliser. Le terminal 306 devra dans ce cas utiliser des marges doppler ou utiliser des pré-compensations en faisant l'hypothèse qu'il connait les éphémérides.

Ensuite dans une première étape 316, le terminal 306 transmet des données utiles de manière aléatoire en temps et en fréquence sur la bande de fréquence BUL qu'il a acquise ou validée à l'étape préalable 314 ou qu'il avait déjà en mémoire. Il émet donc sur un canal aléatoire de données de lien montant UL un premier message de données sous la forme d'une ou plusieurs salves (en anglais « bursts ») de données majoritairement de trafic utile en excluant des bandes de garde correspondant aux marges doppler du système spatial ou en compensant le doppler grâce à une des techniques précédemment mentionnées. Dans ce cas une émission coordonnée pourrait aussi être envisagé.

Suivant une première variante de la première étape 316, lorsque le terminal utilisateur 306 est en mesure de déterminer par lui-même sa géo-localisation, le terminal utilisateur 306 inclut dans ce premier message de données des informations de signalisation telles que son identifiant de terminal et des informations explicites ou implicites concernant sa géo-localisation. Il est à remarquer qu'un terminal, ne disposant pas d'un récepteur GNSS autonome, peut être en mesure de déterminer sa géo-localisation ou de fournir des informations pour sa géo-localisation dans le cas où l'étape préalable 314 a eu lieu et où le terminal a reçu de la signalisation de géo-localisation en provenance de l'entité centrale.

Suivant une deuxième variante de la première étape 316, lorsque le terminal utilisateur n'est pas en mesure de déterminer par lui-même sa géo-localisation, la forme d'onde du signal RF portant le premier message jusqu'à l'entité spatiale est supposée permettre le calcul par l'entité spatiale d'une pluralité suffisante de pseudo-distances pour déterminer la géo-localisation du terminal utilisateur 306. Dans ce cas, aucune information explicite ou implicite concernant la géo-localisation du terminal n'est incluse dans le premier message par ledit terminal 306.

Le terminal utilisateur 306 inclut également une information adaptée au type de service qu'il utilise ou veut utiliser. Par exemple, un bit mis par exemple à 1 peut permettre de signaler un mode d'accès « données standard 4/5G » et basculer en mode DAMA.

Cette première étape pourrait être décomposée en deux phases : une première phase d'entrée dans le réseau satellite avec émission d'une ou plusieurs salves de données de signalisation sur le canal aléatoire et une deuxième phase de transmission d'une ou plusieurs salves (en anglais burst) de données de trafic sur un accès aléatoire utilisant le canal aléatoire ou un accès déterministe.

Si le terminal utilisateur est nominalement un terminal cellulaire terrestre, il est pris comme hypothèse que l'enregistrement au réseau cellulaire a été déjà réalisé dans le réseau terrestre. Dans le cas contraire, cette étape préalable d'enregistrement pourra être réalisée également dans le système satellite après adaptation de certains paramètres comme cela va être décrit par la suite.

Puis au cours d'une deuxième étape 318, l'entité centrale 308 du système spatial, c'est-à-dire le relai spatial ou la passerelle GW, reçoit et décode la ou les salves de données émises par le terminal 306, et associe audit terminal un faisceau logique et une fréquence porteuse de lien descendant DL à partir des informations de localisation dudit terminal 306. Les informations de localisation du terminal sont fournies dans la première étape 316 lorsque le terminal est en mesure de déterminer sa géo-localisation ou d'aider à cette géo-localisation par la transmission d'informations de signalisation ou les informations de localisation sont dérivées du signal reçu portant la ou les salves de données émises lorsque le terminal n'est pas en mesure de déterminer sa géo-localisation ni d'aider à celle-ci.

Le faisceau logique associé est une zone géographique fixe prédéterminée, dans laquelle le terminal se trouve à l'instant actuel T et qui appartient à un pavage de la couverture géographique du système spatial en un ensemble de zones géographiques distinctes, dépourvues de recouvrement mutuel et formant chacune un faisceau logique différent.

Chaque faisceau logique, caractérisé par une zone géographique différente, est associé en temps réel à une pluralité d'un ou plusieurs faisceaux physiques d'émission du relai spatial qui à l'instant actuel recouvrent dans son entier le faisceau logique.

Il est à remarquer que cette triple association entre un terminal, un faisceau logique, et une fréquence porteuse peut être résiliée au bout d'un certain temps d'inactivité du terminal.

Ensuite dans une troisième étape 320, l'entité centrale du système spatial transmet vers le terminal sur une porteuse de signalisation de diffusion (en anglais « broadcast »), vraisemblablement identique à celle utilisée dans la première étape, les caractéristiques d'identification de la porteuse de lien descendant DL de trafic, déterminée dans la deuxième étape 318, que le terminal 306 devra écouter pour recevoir le trafic utile ou de contrôle qui lui est destiné.

Puis dans une quatrième étape 322, le terminal 306 fait l'acquisition de la porteuse de trafic de lien descendant DL qui peut le cas échéant utiliser un rapport cyclique (en anglais « duty cycle ») pour limiter la consommation énergétique du terminal.

Par la suite et de manière optionnelle dans une cinquième étape 324, l'entité centrale 308 du système spatial, i.e. le relai spatial ou la passerelle GW, transmet vers le terminal 306 sur cette porteuse de trafic acquise de lien descendant DL des données ou des informations de contrôle concernant, par exemple le contrôle de congestion, le contrôle de flux, la réduction du plan de fréquence pour gérer des demandes hétérogènes entre zones, ainsi que les informations permettant audit terminal de déterminer une prochaine fréquence porteuse de trafic dans le cas notamment d'un changement de satellite (handover satellite).

Sur cette porteuse de trafic de lien descendant DL, les informations liées au plan de fréquence et à la géo-localisation, peuvent éventuellement être répétées périodiquement.

Puis, les première et deuxième étapes 316, 318 sont répétées à chaque nouvelle transmission de salve(s) de données par le terminal 306.

Une sixième étape 326 correspondant à la répétition de la première étape 316 sur la Figure 5A est représentée.

Il est à remarquer que si le terminal est dans le même faisceau logique que lors de l'émission de la précédente rafale et que l'entité centrale du système, i.e. le relai spatial ou la passerelle GW, ne souhaite pas changer la porteuse de trafic du lien descendant DL de données qui lui est associée, les étapes suivantes, c'est-à-dire les troisième, quatrième et cinquième étapes 322, 324, 326 ne sont pas réalisées.

Lorsque le terminal a changé de faisceau logique ou lorsque le système souhaite lui attribuer une autre porteuse de trafic de lien descendant DL les troisième, quatrième et cinquième étapes 322, 324, 326 sont répétées.

Ainsi, sur la voie retour de lien montant UL les données transmises par le terminal sont majoritairement des données de trafic utile tandis qu'une faible quantité d'informations de signalisation dans la bande concernant essentiellement la géo-localisation du terminal est requise. Ainsi, la part occupée par la signalisation (en anglais « overhead ») est fortement réduite et limitée, et le nombre de terminaux qui ont un bas débit et un trafic sporadique et qui peuvent utiliser en parallèle la composante spatiale est fortement augmenté.

Lors d'un changement de satellite, le terminal doit faire l'acquisition d'une nouvelle porteuse de lien descendant DL de données dont la fréquence porteuse centrale ou une information équivalente est signalée dans la porteuse de trafic DL courante lorsque l'événement se rapproche au cours de la cinquième étape 324. Cette nouvelle acquisition est déclenchée soit par des informations de changement de satellite provenant de mesures ou tout autre signalisation, soit par une perte de synchronisation avec la porteuse courante.

Lorsque le terminal perd toute synchronisation avec les porteuses de trafic actuelles de lien descendant et celles qui sont signalées, le terminal repart dans une phase d'acquisition de la porteuse de diffusion de signalisation telle que réalisée dans la première étape.

Suivant le procédé de communication décrit ci-dessus, le terminal utilisateur ne se préoccupe plus de réaliser les procédures classiques de basculement de communication lors d'un basculement entre faisceaux physiques d'un même satellite.

Suivant le procédé de communication décrit ci-dessus, le terminal utilisateur met à profit les caractéristiques suivantes :
.- en transmettant en lien montant UL vers le satellite de manière aléatoire sur un plan de fréquence commun à tout le système spatial et incluant des marges liées au doppler si nécessaire, aucune signalisation n'est nécessaire pour la fréquence à utiliser sur la voie retour ;
.- le terminal peut être joint dans son faisceau logique sur une fréquence qui reste unique pour ledit faisceau logique tant que ce faisceau est couvert par le même satellite ;
.- le terminal reçoit *une signalisation indiquant la prochaine fréquence envoyée dans la bande pour le ou les satellites qui vont prendre le relais

Suivant la Figure 6, le principe des faisceaux logiques et de leur association dynamique dans le temps avec les faisceaux physiques d'un même satellite 352 est illustré. Le faisceau logique est une zone géographique fixe au sol, par exemple la zone 354 bordée par le carré en trait interrompus, dans laquelle des terminaux 356, 358, 360 sont localisés. Ce faisceau logique 354 est couvert par un ou plusieurs faisceaux physiques formés pas le satellite à chaque instant.

A l'instant T, trois faisceaux physiques qui se recouvrent partiellement entre eux et qui sont désignés par les premier, deuxième, troisième faisceaux physiques 362, 364, 366 permettent une couverture globale du faisceau logique 354. Il y a donc à cet instant T une association entre ces trois faisceaux physiques 362, 364, 366 et le faisceau logique 354, ce qui implique que les informations à envoyer vers ce faisceau logique 354 sont dupliquées dans ces trois faisceaux physiques 362, 364, 366 à cet instant T.

A un instant suivant T+1, les premier et deuxième faisceaux physiques 362, 364 formés par le satellite 352 continuent à couvrir le faisceau logique 354, le troisième faisceau 366 n'a plus de surface d'empreinte au sol de recouvrement du faisceau logique 354. Deux autres faisceaux, un quatrième faisceau physique 372 et un cinquième faisceau physique 374, adjacents à et situés respectivement au dessus des premier et deuxième faisceaux 362, 364 sur la Figure 6, viennent compléter la couverture du faisceau logique 354. A cet instant T+1, ce sont donc les quatre faisceaux physiques, les premier, deuxième, quatrième et cinquième faisceaux physiques 362, 364, 372, 374 qui recouvrent et sont associés au faisceau logique 354.

La notion de faisceaux logiques permet de simplifier la gestion et l'allocation des ressources de transmission pour avoir une fréquence porteuse unique par terminal pour un satellite donné et éviter ainsi une gestion complexe de basculement inter-faisceaux.

En variante et suivant la Figure 7, il est possible de considérer qu'un faisceau logique 384 ne corresponde pas à une zone géographique compacte unique, mais à un ensemble discret de terminaux répartis suivant un nombre fini de zones géographiques élémentaires 384₁, 384₂, 384₃, 384₄, 384₅, 384₆, 384₇, compactes et d'un seul tenant, réparties ici de manière homogène et isotrope.

De manière générale, les zones géographiques élémentaires compactes sont réparties suivant des distances d'espacement entre zones d'espacement entre zones voisines et une fonction de répartition desdites distances d'espacement.

De manière préférée, les zones géographiques élémentaires compactes sont réparties en une grappe ou plusieurs grappes.

Cela implique une très forte complexité de la gestion des recouvrements de couverture inter-satellite lorsqu'une constellation de satellites est utilisée, par exemple une constellation de satellites LEO évoluant en orbite basse.

Suivant la Figure 8, une configuration 391 d'une couverture multi-satellites, ici deux satellites 352, 392, illustre les contraintes exercées sur les faisceaux logiques en raison de leur association avec des faisceaux physiques générés par des satellites situés sur des plans orbitaux adjacents, c'est-à-dire immédiatement voisins et suffisamment proches pour que leurs couvertures géographiques se recouvrent au moins partiellement. La taille maximale du faisceau logique élémentaire 384₅ peut ainsi être contrainte par le recouvrement inter-satellite pour minimiser la gestion entre des satellites adjacents 352, 392 Ainsi un faisceau logique est contraint à tout instant à être pris intégralement en charge par un et un seul satellite.

Suivant la Figure 9, le principe d'utilisation signalisation « dans la bande » dans un entête DCH (en anglais « Duty Cycle Header ») permettant une gestion économique de l'énergie électrique dépensée par les terminaux est illustré à l'aide d'un exemple d'un schéma de transmission dans lequel deux fréquences descendantes de lien descendant DL pour six faisceaux logiques, numérotés ici de 1 à 6, bénéficient d'une réutilisation de fréquence avec un motif de quatre faisceaux logiques.

Des données à transmettre vers un terminal sont émises dans une rafale d'un lien descendant DL sur la porteuse de trafic qu'un terminal doit écouter suivant la cinquième étape de la Figure 4. Une rafale de lien descendant DL peut contenir des données vers plusieurs terminaux, et chaque terminal filtre et extrait alors les données qui lui sont adressées. Cette salve descendante DL est émise par faisceau logique. Afin d'économiser l'énergie dépensée par le terminal utilisateur et de minimiser la puissance émission du satellite, chaque salve descendante de lien descendant DL transmet des informations décrivant où, c'est-à-dire à quelle fréquence descendante de lien descendant DL, et quand, c'est-à-dire à partir de quel instant, la prochaine salve descendante DL sera émise par le satellite et attendue par le terminal. Ainsi le terminal actionne son « réveil » quand nécessaire, c'est-à-dire uniquement quand des données sont susceptibles de lui être adressées.

Pour une même fréquence de lien descendant DL, il n'y a pas d'émission sur un même faisceau logique entre deux rafales consécutives mais il peut y avoir émission sur le même faisceau logique ou sur un autre faisceau logique interféré, adjacent ou non adjacent, à des instants différents séparant des rafales non consécutives. Cependant une même fréquence de lien descendant DL peut avantageusement être réutilisée entre deux faisceaux logiques non-adjacents d'une isolation suffisante en terme d'interférents.

Cette signalisation dite « dans la bande » (en anglais « in-band ») c'est-à-dire contenue dans une salve descendante de lien descendant DL est peu consommatrice en termes de volume, i.e. en de nombre de bits de données transmis. De manière préférée et avantageuse et suivant une première variante, cette signalisation est transmise dans la charge utile de niveau 2 (au sens de la classification normalisée en couches d'un protocole de communication) du paquet de données (burst ou salve de données) pour être compatible des formes d'onde existantes. Il peut être également envisagé dans une deuxième variante de transmettre ladite signalisation dans l'entête de la couche physique. Suivant cette deuxième variante, de manière préférée et avantageuse cette signalisation est rendue robuste aux erreurs de transmission par un codage approprié à de faibles rapports signal à bruit car cette signalisation décrit de proche en proche, c'est-à-dire d'une salve à la suivante, le trafic descendant DL. Cette signalisation désigné sous l'abréviation « DCH » (en anglais « Duty Cycle Header ») décrit ainsi au moins les deux informations suivantes :
.- la prochaine fréquence descendante que le terminal doit écouter, désignée ici par le terme générique en anglais « next frequency burst DL» ; par exemple la prochaine fréquence descendante que le terminal doit écouter peut-être référencée à un indice ou numéro de canal de fréquence connu ou une valeur relative de fréquence par rapport à la fréquence courante ; et
.- le prochain instant de début à partir duquel le terminal doit écouter, désigné ici par le terme générique en anglais « next start burst DL » ; le prochain instant de début indique l'instant de début de la prochaine salve descendante DL et peut être exprimé par un nombre multiple de salves à partir de la fin de la salve courante écoutée.

Suivant la Figure 9, par simplicité et efficacité du système toutes les salves de trafic descendant DL ont une même taille et un même format physique. Pour décrire plusieurs salves descendantes de lien descendant DL consécutives la valeur de « next start burst DL est prise égale à 0. Sinon sa valeur est un multiple de N*bursts DL, N étant un paramètre système paramétrable, par défaut mis égal à 1.

La couche physique PHY contient également une entête de couche physique PLH (en anglais « Physical Layer Header ») décrivant très généralement un mot unique et une séquence de récupération de fréquence et de rythme symbole. Cet entête peut aussi identifier la taille de la salve descendante DL qui suit avec une signalisation adaptée et robuste aux erreurs de transmission. Par exemple deux bits permettent de caractériser quatre largeurs possibles de rafales descendantes DL pour ce service d'économiseur d'énergie au niveau du terminal utilisateur. En variante et de manière préférée, la signalisation qui identifie la taille de la salve descendante DL qui suit est incluse dans la charge utile de niveau 2 paquet de donnée et non pas dans l'entête de la couche physique, ce qui évite de modifier la forme d'onde.

L'algorithme d'allocation et de planification ou prévision (en anglais « scheduling ») du trafic descendant DL sur chaque satellite et sur chaque faisceau physique descendant DL peut tirer profit de la connaissance d'une répartition géographique et temporel de la demande de trafic, de l'isolation entre faisceaux physiques, et définir à partir de cette connaissance une planification de fréquences et des instants de début d'écoute terminal pour chaque satellite et chaque faisceau logique.

Le terme utilisé de rapport cyclique (en anglais « Duty Cycle »), lié au réveil du terminal ou de manière complémentaire à la veille de celui-ci résulte alors du fait qu'un motif (en anglais « pattern ») d'allocation descendante DL en termes de ressources de transmission pour un faisceau logique donné change uniquement en fonction de la répartition géographique et temporelle de la demande en trafic et des variations d'interférents entre faisceaux physiques sur mouvement des satellites.

Suivant l'exemple de la Figure 9, à un instant donné, deux groupes de faisceaux logiques, un premier groupe 402, désigné par l'ensemble des numéros {1, 2, 3, 4}, comprenant les quatre faisceaux logiques numérotés de 1 à 4, et un deuxième groupe 404, désigné par l'ensemble des numéros {5, 6}, comprenant deux faisceaux logiques numérotés de 1 à 2, sont répartis au sol suivant un motif de répartition géographique prédéterminé.

Les premier et deuxième groupes 402, 404, réutilisent respectivement une même première fréquence f1 descendante DL et une même deuxième fréquence f2 descendante DL. Pour un groupe donné de faisceaux logiques les émissions descendantes sont disjointes temporellement. Ainsi les émissions descendantes à la première fréquence descendante f1 sur les quatre faisceaux 1 à 4 du premier groupe sont temporellement disjointes, et les émissions descendantes à la deuxième fréquence descendante f2 sur les deux faisceaux 5 et 6 du deuxième groupe sont temporellement disjointes.

Chaque salve descendante DL signale dans son entête la prochaine fréquence à écouter et l'instant du début de la prochaine salve descendante à recevoir ou bien suit un motif (en anglais pattern) prédéfini. Un terminal utilisateur se met dans un état de repos pendant la durée qui sépare la fin de la dernière salve écoutée qui lui est destinée et l'instant de début connu de la prochaine salve consécutive attendue qui lui est destinée, des données ne lui étant toutefois pas nécessairement adressées dans chaque salve qu'il démodule.

Cet exemple illustre également le nombre de salves descendantes DL consécutives par faisceau logique, ce nombre dépendant de la charge de trafic descendant. Les première et deuxième fréquences sont indiquées dans les entêtes DCH par un identifiant correspondant

Dans le cas d'un terminal utilisateur qui utilise nominalement un réseau terrestre ou assimilé et qui souhaite pouvoir entrer dans le système spatial de l'invention décri ci-dessus, des procédures spécifiques suivant les ordinogrammes des Figures 10A et 10B sont utilisées pour lui permettre ladite entrée dans le réseau spatial ou connexion à ce dernier et la réalisation des étapes d'une communication dans le système spatial telles que décrites dans la Figure 5A.

Les ordinogrammes des Figures 10A et 10B décrivent un algorithme de sélection automatique du type de réseau mobile parmi un réseau cellulaire terrestre ou un réseau spatial (réseau satellite ou assimilé HPAS) permettant la transparence et le maintien de la session. L'algorithme décrit à un haut niveau le protocole permettant de sélectionner l'un ou l'autre des accès en fonction de la disponibilité de ces accès et d'une stratégie préférentielle d'utilisation desdits accès entre eux. Ici, la stratégie préférentielle utilisée dans les Figures 9A et 9B est de privilégier en règle générale l'accès terrestre quand il est disponible et à assurer une couverture globale spatiale de type parapluie lorsque l'accès terrestre n'est plus accessible.

Toutefois d'autres stratégies peuvent être envisagées. Par exemple lorsqu'un service exige une disponibilité particulièrement élevée, une solution à diversité de système pourra être envisagée dans laquelle une première connexion du terminal au système cellulaire terrestre et une deuxième connexion du terminal au système spatial multifaisceaux sont actives en même temps.

Suivant la Figure 10A, le procédé de basculement 412 comprend un ensemble d'étapes suivantes.

Après une première étape d'initialisation 416 du système intégré, dans une deuxième étape 418, une stratégie de balayage est fournie est fournie au terminal utilisateur, à savoir l'ordre dans lequel les fréquences des systèmes mobile terrestre et satellite sont balayées.

Par exemple, le plan de fréquences des systèmes mobile terrestre et satellite ainsi que la stratégie de balayage sont fournis au terminal par le système mobile terrestre et/ou le système mobile satellite. Le plan de fréquence peut également être préenregistré dans le terminal utilisateur.

Suivant un autre exemple, des éphémérides du ou des satellites, un plan de fréquences des porteuses utilisées par le ou les satellites, et un motif spatial et/ou des faisceaux physiques, et un plan de fréquences des porteuses du système mobile terrestre sont fournis au terminal utilisateur qui dispose d'un programme lui permettant de déterminer une stratégie de balayage des balises.

Puis, une troisième étape 420 de lancement de balayage et d'écoute des porteuses de diffusion, appelées balises du système mobile terrestre et/ou du système mobile spatial, est mise en oeuvre suivant l'algorithme 482 de la Figure 10B, et fournit une indication du nouveau mode de connexion à sélectionner parmi le mode « terrestre », et le « mode spatial », et le « mode nul » correspondant respectivement à une nouvelle connexion au système cellulaire terrestre, une nouvelle connexion au système spatiale, et à une absence de connexion. Cette étape met en oeuvre la stratégie de balayage fournie dans la deuxième étape 418, à savoir l'ordre dans lequel les fréquences des systèmes mobile terrestre et satellite sont balayées.

Ensuite, dès que la troisième étape 420 est en mesure de fournir l'indication du mode de la nouvelle connexion à sélectionner, une quatrième étape 422 valide cette indication.

Puis dans une cinquième étape 424, le terminal sélectionne le mode de la nouvelle connexion à partir de l'indication, validée et fournie dans la quatrième étape 422, du mode de la nouvelle connexion à sélectionner.

Lorsque le mode « terrestre » est sélectionné un premier sous-ensemble d'étapes 426 est exécuté, tandis que lorsque le mode « spatial » est sélectionné un deuxième sous-ensemble d'étapes 428 est exécuté.

Lorsque le « mode nul » est sélectionné, un branchement du procédé 412 est effectué en début de la troisième étape 420.

Le premier sous-ensemble d'étapes 426 comprend une sixième étape 432, exécutée en premier, au cours de laquelle la connexion via le réseau mobile terrestre est établie.

Puis, dans une septième étape 434, une temporisation est enclenchée.

Ensuite dans une huitième étape 436 la connexion terrestre est activée et la communication peut avoir lieu.

Au cours de cette huitième étape 436, les trois évènements suivants sont surveillés : l'expiration de la temporisation, la perte de la connexion actuelle, et l'indication d'un mode de nouvelle connexion.

Lorsque, dans une neuvième étape 438, l'expiration de la temporisation a été détectée, une dixième étape de lancement d'un balayage 440 est exécutée, le balayage étant décrit par le procédé de la Figure 10B. Puis, une onzième étape 442 de branchement à la huitième étape 436 est exécutée sans interrompre la connexion en cours.

Lorsque dans une douzième étape 444 une perte de connexion actuelle est détectée, un branchement du procédé 412 est effectuée en entrée 446 de la troisième étape 420.

Lorsque dans une treizième étape 448, l'indication d'un mode d'une connexion est détectée suite à l'exécution du balayage lancé dans l'étape 440, une quatorzième étape 450 est exécutée au cours de laquelle le terminal sélectionne le mode de la nouvelle connexion tel qu'indiqué et validé dans la treizième étape 448.

Lorsque le mode « terrestre » est sélectionné dans la quatorzième étape 450, une quinzième étape 452 est exécutée au cours de laquelle un branchement à la huitième étape 436 et un enclenchement de temporisation sont effectués conjointement.

Lorsque le mode « satellite » est sélectionné dans la quatorzième étape 450, un branchement est effectué en entrée 454 du deuxième sous-ensemble d'étapes 428.

Lorsque le mode « nul » est sélectionné un branchement du procédé 412 est effectuée en entrée 446 de la troisième étape 420.

Le deuxième sous-ensemble d'étapes 428 comprend une seizième étape 456, exécutée en premier, au cours de laquelle les paramètres et les algorithmes concernant le système satellite sont appliqués par le terminal pour commuter sur le canal de communication satellite en utilisant le même matériel (en anglais « hardware ») et la même forme d'onde que pour le système terrestre.

Puis dans une dix septième étape 458, la connexion via le réseau mobile satellite est établie.

Ensuite, dans une dix huitième étape 460, une temporisation est enclenchée.

Puis dans une dix neuvième étape 462 la connexion satellite est activée et la communication peut avoir lieu.

Au cours de cette dix-neuvième étape 462, les trois évènements évènement suivants sont surveillés : l'expiration de la temporisation, la perte de la connexion actuelle, et l'indication d'un mode de nouvelle connexion.

Lorsque, dans une vingtième étape 464, l'expiration de la temporisation a été détectée, une vingt et unième étape de lancement 466 d'un balayage est exécutée, le balayage étant décrit par le procédé de la Figure 10B. Puis, une vingt-deuxième étape 468 de branchement à la dix-neuvième étape 462 est exécutée sans interrompre la communication actuelle en cours.

Lorsque, dans une vingt troisième étape 470, une perte de connexion actuelle est détectée, un branchement du procédé est effectuée en entrée 446 de la troisième étape 420.

Lorsque dans une vingt quatrième étape 472, l'indication d'un mode d'une connexion est détectée suite à l'exécution du balayage lancé dans l'étape 466, une vingt cinquième étape 474 est exécutée au cours de laquelle le terminal sélectionne le mode de la nouvelle connexion telle qu'indiqué et validé dans la vingt quatrième étape 472.

Lorsque le mode « terrestre » est sélectionné dans une vingt cinquième étape 474, un branchement est effectué en entrée 476 de la sixième étape 432.

Lorsque le mode « satellite » est sélectionné, une vingt sixième étape 478 est exécutée au cours de laquelle un branchement à la dix-neuvième étape 462 et un enclenchement de temporisation sont effectués conjointement.

Lorsque le mode « nul » est sélectionné un branchement du procédé 412 est effectuée en entrée 446 de la troisième étape 420.

Suivant la Figure 10B, le procédé 482 d'évaluation de la disponibilité des canaux des systèmes cellulaire terrestre et satellite par balayage de balises et de fourniture de l'indication du système à sélectionner sous la forme d'un mode d'une nouvelle connexion comprend un ensemble d'étapes.

Cet ensemble d'étapes met en oeuvre la stratégie de balayage précédemment décrite, à savoir l'ordre dans lequel les fréquences des systèmes mobile terrestre et satellite sont balayées. Cela va permettre par exemple de donner la priorité à l'un des deux modes parmi le mode « satellite » et le mode « terrestre ». Un exemple de cet ensemble d'étapes donnant la priorité au système mobile terrestre est décrit ci-dessous.

Dans une vingt septième étape 484 de démarrage, le balayage des porteuses des systèmes terrestre et satellite démarre et cette vingt septième étape est déclenchée par les étapes 420, 440, 466.

Puis dans une vingt huitième étape 486, l'interface radio du terminal est paramétré pour fonctionner dans un réseau mobile terrestre et effectue le balayage des balises du réseau terrestre.

Ensuite dans une vingt neuvième étape de test 488, il est déterminé si une synchronisation sur une nouvelle porteuse terrestre est possible.

Dans l'affirmative, dans une trentième étape 490 un mode terrestre de nouvelle à sélectionner est identifié et indiqué au terminal pour validation.

A l'inverse, c'est-à-dire si une synchronisation sur une nouvelle porteuse terrestre n'est pas possible, une trente et unième étape 492 est exécutée, dans laquelle une stratégie de balayage des balises du satellite en fonction du temps est déterminé.

Dans une trente deuxième étape 494, consécutive à la trente et unième étape 492, l'interface radio du terminal est paramétrée pour fonctionner dans un réseau mobile satellite et effectue le balayage des balises du réseau satellite.

Ensuite dans une trente troisième étape 496, il est déterminé si une synchronisation sur une nouvelle porteuse satellite est possible.

Dans l'affirmative, dans une trente quatrième étape 498 un mode satellite de nouvelle connexion à sélectionner est identifié et indiqué au terminal pour validation.

A l'inverse, c'est-à-dire si une synchronisation sur une nouvelle porteuse satellite n'est pas possible, aucun mode de connexion à un réseau mobile n'a pu être identifié. Dans ce cas une trente cinquième étape 499 est exécutée au cours de laquelle un mode dit « nul » d'impossibilité de nouvelle connexion à sélectionner est identifié et indiqué au terminal pour validation.

Suivant la Figure 11 et de manière simplifiée, un procédé de communication 502 dans un système intégré ubiquitaire tel que celui décrit dans la Figure 1 ou la Figure 2 est configurée pour permettre un basculement entre un mode opératoire « terrestre » de connexion à un système cellulaire terrestre ou assimilé et un mode opératoire « spatial » de connexion à un système « spatial » en fonction de la disponibilité d'un canal terrestre et d'un canal spatial (satellite ou HAPS).

Le basculement entre le mode opératoire terrestre et le mode opératoire satellite ici privilégie une connexion au système cellulaire terrestre et comprend un ensemble d'étapes.

Lorsque le terminal est allumé dans la première étape 504, au cours d'une deuxième étape 506, une première configuration dudit terminal est établie pour communiquer sur un canal de communication terrestre en utilisant les paramètres de ce canal de communication qui incluent une ou des première(s) fréquence(s) porteuse(s) centrale(s), une largeur de bande, une méthode d'accès, et une signalisation associée.

Puis, lorsqu'il est établi dans une troisième étape 508 que le terminal utilisateur a échoué dans sa tentative à se connecter sur ce canal de communication terrestre, dans une quatrième étape 510 le terminal met en oeuvre une deuxième configuration pour communiquer sur le canal satellite en utilisant les paramètres spécifiques dudit canal satellite qui incluent une ou des deuxième(s) fréquence(s) porteuse(s) centrale(s), une largeur de bande, une méthode d'accès et sa signalisation associée, un même matériel (en anglais hardware) étant utilisé et incluant une même puce modem (chipset), un même émetteur RF et une même antenne.

Lorsqu'il est établi dans la troisième étape 508 que le terminal utilisateur a échoué dans sa tentative à se connecter sur ce canal de communication terrestre, mais qu'il est établi dans une cinquième étape de test 512 que la communication terrestre est perdue, la quatrième étape 510 est réalisée à nouveau.

A l'inverse, lorsque la cinquième étape 512 établit le bon état de la communication terrestre, cette dernière est poursuivie dans la sixième étape 514 de poursuite.

Lorsqu'il a pu être établi dans une septième étape 516, exécutée consécutivement à la quatrième étape 510, que le terminal a pu se connecter au canal de communication spatial, périodiquement une huitième étape 518 d'enclenchement d'une temporisation et une neuvième étape 520 de test formant une boucle 522 sont répétées.

Dans la neuvième étape 520, déclenchée dès que la temporisation a expiré, il est déterminé à l'instar de la troisième étape 508 si terminal utilisateur a réussie à se connecter sur le canal de communication terrestre en activant la première configuration terrestre.

Dans le cas d'un succès de cette connexion au système terrestre, le basculement de la communication a lieu sur le canal terrestre dans une dixième étape 524 et la communication se poursuit avec un branchement en entrée de la cinquième étape 512 de test.

Dans le cas d'un échec de la connexion au système terrestre, le terminal se repositionne sur la configuration du canal spatial et les huitième et neuvième étapes 518, 520 sont répétées.

En parallèle et après l'enclenchement de la temporisation, la communication sur le canal spatial est poursuivi dans une onzième étape 526 tant qu'un basculement sur le canal terrestre n'a pas eu lieu.

Le module logiciel du terminal de la Figure 4 qui permet la configuration de la méthode d'accès nécessaire et de pouvoir communiquer sur le canal satellite tout en restant compatible avec une norme actuelle comme par exemple la norme 3GPP est un des points clés qui rend la communication ubiquitaire selon l'invention possible.

Il est à remarquer qu'une composante satellitaire basée sur une constellation défilante en orbite basse est préférée. Cette composante satellitaire est configurée pour s'interfacer avec le réseau coeur de l'infrastructure cellulaire voire un équipement de control des ressources radio du réseau d'accès radio de l'infrastructure cellulaire.

Il convient d'adapter la ou les stations de base embarquée(s) sur le(s) satellite(s) ou co-localisée(s) avec la ou les (les) station(s) d'accès GW du segment spatial par :
.- le traitement du Doppler induit par le mouvement des satellites dans le cadre du constellation défilante en utilisant par exemple les éphémérides des satellites et aussi, on peut pour ce faire et pour faciliter le traitement demander au terminal d'indiquer sa position ou déterminer la position dudit terminal, et
.- le traitement du canal d'accès aléatoire spécifique au canal de transmission du système satellite.

En ce qui concerne le traitement du Doppler, les systèmes à défilement pouvant induire de forts écarts Doppler et une rampe Doppler importante, il est nécessaire de pouvoir acquérir rapidement la dérive de fréquence occasionnée, qui, à l'allumage du terminal peut se trouver dans une fenêtre de plusieurs dizaines de kHz. Pour réduire le temps d'acquisition initiale et de synchronisation, il peut être utile disposer d'informations sur les positions relatives du satellite et du terminal.

Ainsi le terminal, via le biais d'un récepteur GNSS (en anglais Global Navigation Satellite System), et la connaissance des éphémérides des satellites, peut, en agissant sur son oscillateur local, ajuster sa fréquence de réception à une valeur proche de celle reçue effectivement et affectée d'une dérive Doppler. Ce mécanisme permet de réduire considérablement la fenêtre d'acquisition du signal.

De la même façon, lors de l'émission sur une fréquence donnée, le terminal peut soustraire (en valeur algébrique) de la valeur nominale d'émission la dérive fréquentielle supposée du signal à son arrivée au satellite, ce qui permet de compenser au second ordre près l'écart Doppler.

L'ensemble des techniques mises en oeuvre dans la composante spatiale du système ubiquitaire permet ainsi de rendre les terminaux cellulaires compatibles également d'une opération par une composante spatiale. Elle permet d'adresser non seulement les terminaux utilisateurs qui font des usages fréquent des ressources satellites, par exemple les terminaux utilisateurs installés dans les zones dites « blanches » mais également les besoins occasionnels ce cette ressource, par exemple les terminaux utilisateurs en visite dans lesdites zones « blanches. L'activation du service d'extension de couverture par satellite se fait par configuration logicielle du terminal.

En outre cette solution est compatible d'un déploiement graduel avec le lancement progressif de satellites pour offrir dans un premier temps une extension de couverture sur une zone limitée de façon intermittente. Puis d'élargir la zone d'extension de service avec l'ajout de satellite, puis enfin de d'augmenter la possibilité d'accès au service.

Elle est également compatible de différents type/taille de satellites NGSO voire de HAPS. Ceci aura un impact sur la taille de la couverture adressable par cette composante spatiale.

De plus sur la partie intégration satellite/terrestre de l'invention, la solution proposée se base sur les fonctions des constituants matériel et les possibilités de configuration des protocoles de l'interface radio en cours de normalisation au 3GPP sous l'appellation NB-loT (Narrow Band Internet of Things). En effet, la plateforme matérielle de certains terminaux est caractérisée par un étage Radio Fréquence agile permettant d'opérer dans différentes bandes de fréquences allouées au Service Mobile dans une gamme de fréquence incluant au moins des bandes allouées au service mobile par satellite par exemple dans la gamme 1518 à 2500 MHz (Radio logicielles). De plus dans le contexte de la standardisation NB-loT, des largeurs de bande plus étroites que ce qu'il est possible de faire dans les précédentes normes et les systèmes classiques sont réalisées.

## Revendications

1. Procédé de communication spatiale mis en oeuvre par un système spatial multifaisceaux de télécommunications,
le système spatial (12 ;112) multifaisceaux de télécommunications comprenant :
- un relai spatial multifaisceaux (52 ; 152) pris parmi un satellite et une plateforme relai à altitude élevée HAPS ; et
- une station sol (22 ; 122) GW, servant de passerelle d'interconnexion entre une infrastructure terrestre fixe et le relai spatial multifaisceaux;
- un module d'accès (308) au réseau spatial formé par le relai spatial multifaisceaux et la station sol, ledit module d'accès (308) étant embarqué à bord du relai spatial multifaisceaux lorsque le relai spatial multifaisceaux est régénératif ou embarqué dans la station sol GW lorsque le relai spatial multifaisceaux est transparent ou distribué entre le relai spatial multifaisceaux et la station sol GW, un terminal utilisateur (6 ; 106 ; 306),
le procédé de communication spatiale comprenant les étapes suivantes :
- dans une première étape (316), le terminal utilisateur (306) émet à un instant donné T sur un canal aléatoire de données de lien montant UL et dans une plage de fréquences prédéterminée vers le module d'accès au réseau spatial une ou plusieurs salves de données majoritairement de trafic utile, incluant un identifiant et, lorsque le terminal est en mesure de déterminer sa géo-localisation ou d'aider à sa géo-localisation, des informations explicites ou implicites de localisation géographique dudit terminal ; ledit procédé de communication spatiale étant **caractérisé en ce qu'**il comprend en outre les étapes suivantes :
- dans une deuxième étape (318), le module d'accès (308) au réseau spatial :
reçoit et décode la ou les salves de données émises par le terminal, associe au terminal un faisceau logique (354 ; 384) à partir des informations de localisation dudit terminal, fournies dans la première étape (316) lorsque le terminal est en mesure de déterminer sa géo-localisation ou d'aider à sa géo-localisation, ou dérivées du signal reçu portant la ou les salves de données émises lorsque le terminal n'est pas en mesure de déterminer ou d'aider à sa géo-localisation, le faisceau logique (354 ; 384) associé étant une zone géographique fixe prédéterminée dans laquelle le terminal se trouve à l'instant actuel T et qui appartient à un pavage de la couverture géographique du système spatial multifaisceaux de télécommunications en un ensemble de zones géographiques distinctes, dépourvues de recouvrement mutuel et formant chacune un faisceau logique différent, et
associe en temps réel au faisceau logique associé une pluralité d'un ou plusieurs faisceaux physiques d'émission du relai spatial qui à l'instant donné T recouvrent dans son entier ledit faisceau logique associé; puis
- dans une troisième étape (320), le module d'accès (308) au réseau spatial envoie au terminal au travers d'une balise de diffusion dont le terminal connait déjà la fréquence porteuse, un identifiant d'une porteuse d'un canal de données de lien descendant DL, allouée au terminal, à son faisceau logique associé et à la pluralité des faisceaux physiques associés en temps réel audit faisceau logique, pour permettre au terminal de recevoir et décoder des données utiles et de contrôle qui lui sont destinées.

2. Procédé de communication spatiale selon la revendication 1, dans lequel la première étape (316) comprend une première phase d'entrée dans le réseau spatial avec émission d'une ou plusieurs salves de données de signalisation sur le canal aléatoire et une deuxième phase de transmission d'une ou plusieurs salves de données sur un accès aléatoire utilisant le canal aléatoire ou un accès déterministe.

3. Procédé de communication spatiale selon l'une quelconque des revendications 1 à 2, dans lequel
dans la troisième étape (320), une porteuse unique de canal descendant DL est allouée par le module d'accès au réseau spatial au faisceau logique dans lequel le terminal se trouve et à sa pluralité des faisceaux physiques associés en temps réel.

4. Procédé de communication spatiale selon l'une quelconque des revendications 1 à 3, comprenant en outre les étapes suivantes :
- dans une quatrième étape (322), exécutée après la troisième étape (320), le terminal (306) effectue l'acquisition de la porteuse du canal de données de lien descendant DL suivant l'identifiant de fréquence porteuse qui lui a été transmis et se met à l'écoute d'éventuelles salves transmises sur cette porteuse DL qui lui sont éventuellement destinées ; puis
- dans une cinquième étape (324), le module d'accès (308) au réseau spatial envoie au terminal au travers du canal de données de lien descendant DL à la fréquence porteuse du faisceau logique auquel le terminal est associé, une ou plusieurs salves de données utiles et/ou de données contrôle du terminal et/ou de signalisation d'une nouvelle porteuse associé au faisceau logique de rattachement du terminal, ledit envoi étant effectué sur la pluralité associée en temps réel du ou des faisceaux physiques d'émission du relai spatial qui à l'instant donné T recouvrent dans son entier et sont associés au faisceau logique du terminal.

5. Procédé de communication spatiale selon la revendication 4, dans lequel
les données de contrôle concernent la mise en oeuvre :
d'un mécanisme de contrôle de l'accès à contention sur le canal aléatoire de lien montant UL, incluant le contrôle de congestion et le contrôle de flux et prenant en compte la spécificité d'un canal de communication par satellite ou par station HAPS, avec sélection de temporisations et sélection d'un mode de transmission en fonction du type de données à transmettre ; et/ou
d'un mécanisme spécifique de contrôle de puissance adapté au canal de communication de liaison montante UL ; et/ou
d'un mécanisme de contrôle des dérives Doppler ; et/ou
d'un mécanisme économiseur de l'énergie électrique du terminal basé sur la fourniture d'une information de rapport cyclique temporel, représentative d'un partage temporel d'une même fréquence de porteuse de canal de données de lien descendant DL par plusieurs faisceaux logiques desservies par un même satellite.

6. Procédé de communication spatiale selon la revendication 5, dans lequel les données de contrôle concernant la mise en oeuvre du mécanisme économiseur de l'énergie électrique du terminal sont signalées dans un entête de signalisation spécifique contenant les deux informations suivantes :
- une prochaine fréquence descendante, next frequency burst DL, que le terminal doit écouter, référencée à un indice ou un numéro de canal de fréquence connu ou une valeur relative de fréquence par rapport à une fréquence courante ; et
- un prochain instant de début, next start burst 2. DL, à partir duquel le terminal doit écouter, le prochain instant de début indiquant l'instant de début de la prochaine salve descendante DL et pouvant être exprimé par un nombre multiple de salves à partir de la fin de la salve courante écoutée.

7. Procédé de communication spatiale selon l'une quelconque des revendications 4 à 6, comprenant en outre une sixième étape (326), exécutée après la cinquième étape (324), et dans laquelle :
le terminal (306) envoie au module d'accès au réseau spatial sur le canal de communication aléatoire de lien montant UL une ou plusieurs salves de données ainsi que des informations concernant la localisation dudit terminal à un nouvel instant T+1.

8. Procédé de communication spatiale selon l'une quelconque des revendications 1 à 7, comprenant une étape préalable (314) à la première étape (316) dans laquelle le module d'accès (308) diffuse vers l'au moins un terminal (306) qui se trouve dans la couverture géographique globale du relais spatial et sur une balise de diffusion dont l'au moins un terminal connait déjà la fréquence porteuse, d'une part le plan de fréquences du système spatial contenant une liste d'identifiants et de fréquences respectivement associées des porteuses de liens montants et de liens descendants, et d'autre part des informations d'aide à la localisation du ou des terminaux.

9. Procédé de communication spatiale selon l'une quelconque des revendications 1 à 8, dans lequel
le faisceau logique (354) est une zone géographique simple, compacte et d'un seul tenant, ou
le faisceau logique (384) est un ensemble discret fini de zones géographiques élémentaires (384₁, 384₂, 384₃, 384₄, 384₅, 384₆, 384₇), compactes et d'un seul tenant, réparties suivant des distances d'espacement entre zones voisines prédéterminées, de manière préférée en une grappe ou plusieurs grappes.

10. Procédé de communication spatiale selon la revendication 9, dans lequel
la forme d'une zone géographique, simple ou élémentaire, est polygonale, de manière préférée carré ou rectangulaire ou losange ou triangulaire ou hexagonale, ou circulaire ou elliptique.

11. Procédé de communication spatiale selon l'une quelconque des revendications 9 à 10, dans lequel
le faisceau logique (384) est un nombre entier de zones géographiques élémentaires, compactes et d'un seul tenant, réparties de manière isotrope et homogène, le nombre entier de zones géographiques élémentaires étant de préférence compris entre 2 et 25.

12. Procédé de communication spatiale selon l'une quelconque des revendications 1 à 11, dans lequel
le système spatial multifaisceaux (12 ; 112) de télécommunications est configuré pour être intégré dans un système intégré de télécommunications, le système intégré (2 ; 102) de télécommunications comprenant en plus du système spatial multifaisceaux de télécommunications au moins un système terrestre (14), mobile et cellulaire,
le système terrestre comportant :
- intégrés dans une ou deux stations sol terrestre(s), un relai radiofréquence terrestre cellulaire et une passerelle d'interconnexion entre le relai RF terrestre et une infrastructure terrestre fixe commune, partagée avec le système spatial multifaisceaux de télécommunications; et
- un module d'accès au système terrestre, formé par le relai RF terrestre et la ou les deux stations, ledit module d'accès étant inclus dans la station ou l'une des deux stations terrestre, et
- au moins un terminal spatial utilisateur (6 ; 106 ; 306) du système spatial multifaisceaux de télécommunications, configuré bi-mode ou multi-mode pour communiquer dans le système spatial multifaisceaux de télécommunications et/ou le système terrestre ;
le procédé de communication spatiale comprenant les étapes suivantes exécutées avant la première étape :
- dans une étape préalable (418), le module d'accès diffuse vers l'au moins terminal qui se trouvent dans la couverture géographique globale du relai spatial multifaisceaux un plan de fréquences du système spatial multifaisceaux de télécommunications contenant une liste d'identifiants et de fréquences respectivement associées des porteuses de liens montants et de liens descendants ; puis
- dans une étape (418) de lancement et d'exécution de balayage, les balises de diffusion du système terrestre et/ou du système spatial multifaisceaux de télécommunications sont balayées par l'au moins un terminal spatial utilisateur suivant un algorithme de balayage (482) prédéterminé, et une indication d'un mode de nouvelle connexion, pris parmi la connexion au système terrestre et au système spatial, et à sélectionner est fournie, cette indication étant fonction des disponibilités respectives du système terrestre et du système spatial multifaisceaux de télécommunications et d'une stratégie de sélection à base de priorités d'un système parmi le système terrestre et le système spatial multifaisceaux de télécommunications, puis
- dans une étape de validation (422), l'indication du mode de connexion à sélectionner est validée par l'au moins un terminal spatial utilisateur ; ensuite
- dans une étape (424) de sélection du système de communication par le terminal spatial utilisateur, lorsque le mode terrestre est sélectionné le terminal est connecté au système terrestre, et lorsque le mode satellite est sélectionné le terminal est connecté au système satellite en exécutant l'ensemble des première et deuxième étapes ou l'ensemble des première, deuxième, troisième, quatrième et cinquième étapes.

13. Procédé de communication spatiale selon la revendication 12, comprenant une étape de commutation (456) de la configuration matérielle et logicielle du terminal depuis un mode adapté aux canaux des liens montant descendant du système terrestre vers un mode adapté aux canaux des liens montant et descendant du système spatial multifaisceaux de télécommunications, l'étape de commutation étant interposée entre l'étape de sélection du système de communication et la première étape (458), et étant effectué en appliquant de nouveaux paramètres de couche PHY/MAC et de nouveaux algorithmes spécifiques des canaux spatiaux sans changement de chaine RF et de forme d'onde.

14. Procédé de communication spatiale selon l'une quelconque des revendications 12 à 13, comprenant une étape (462) de contrôle du maintien de la communication spatiale, activée périodiquement suivant une temporisation de durée prédéterminée, au cours de laquelle
les balises de diffusion du système terrestre et/ou du système spatial multifaisceaux de télécommunications sont balayées suivant l'algorithme de balayage (482) prédéterminé, et une indication d'un mode de nouvelle connexion, pris parmi la connexion au système terrestre et au système spatial, et à sélectionner est fournie, cette indication étant fonction des disponibilités respectives du système terrestre et du système spatial multifaisceaux de télécommunications et de la stratégie de sélection à base de priorités d'un système parmi le système terrestre et le système spatial multifaisceaux de télécommunications, et
lorsque l'indication fournie est le mode spatial la communication est maintenu sur le réseau spatial.

15. Procédé de communication spatiale selon la revendication 14, dans lequel lorsque l'indication fournie du mode de la nouvelle connexion est le mode terrestre, une commutation de la communication sur le réseau mobile terrestre est effectuée sans interrompre ladite communication.

16. Procédé de communication quelconque des revendications 12 à 13, dans lequel une stratégie de sélection du mode d'une nouvelle connexion est basée sur la priorité du mode terrestre de connexion par rapport au mode spatial de connexion.

17. Système spatial (2; 112) multifaisceaux de télécommunications comprenant :
- un relai spatial multifaisceaux (52 ; 152) pris parmi un satellite et une plateforme relai à altitude élevée HAPS ; et
- une station sol (22; 122) GW, servant de passerelle d'interconnexion entre une infrastructure terrestre fixe et le relai spatial multifaisceaux
- un module d'accès (308) au réseau spatial formé par le relai spatial multifaisceaux et la station sol, ledit module d'accès étant embarqué à bord du relal spatial multifaisceaux lorsque le relai spatial multifaisceaux est régénératif ou embarqué dans la station sol GW lorsque le relai spatial multifaisceaux est transparent,
- au moins un terminal spatial utilisateur (6 ; 106 ; 306),
le terminal (6 ; 106 ; 306) est configuré pour, dans une première étape, émettre à un instant donné T sur un canal aléatoire de données de lien montant UL et dans une plage de fréquences prédéterminée vers le module d'accès au réseau spatial une ou plusieurs salves de données majoritairement de trafic utile, incluant un identifiant et, lorsque le terminal est en mesure de déterminer ou d'aider sa géo-localisation, des informations explicites ou implicites de localisation géographique dudit terminal ; le module d'accès (308) au réseau spatial est configuré pour :
- dans une deuxième étape consécutive à la première étape, recevoir et décoder la ou les salves de données émises par le terminal, associer au terminal un faisceau logique (354 ; 384) à partir des informations de localisation dudit terminal, fournies dans la première étape lorsque le terminal est en mesure de déterminer ou d'aider à sa géo-localisation ou dérivées du signal reçu portant la ou les salves de données émises lorsque le terminal n'est pas en mesure de déterminer ou d'aider à sa géo-localisation, le faisceau logique (354 ; 384) associé étant une zone géographique fixe prédéterminée dans laquelle le terminal se trouve à l'instant actuel T et qui appartient à un pavage de la couverture géographique du système spatial multifaisceaux de télécommunications en un ensemble de zones géographiques distinctes, dépourvues de recouvrement mutuel et formant chacune un faisceau logique différent, et associer en temps réel au faisceau logique associé une pluralité d'un ou plusieurs faisceaux physiques d'émission du relai spatial qui à l'instant donné T recouvrent dans son entier ledit faisceau logique associé; puis
- dans une troisième étape, envoyer au terminal au travers d'une balise de diffusion dont le terminal connait déjà la fréquence porteuse, un identifiant d'une porteuse d'un canal de données de lien descendant DL, allouée au terminal, à son faisceau logique associé et à la pluralité des faisceaux physiques associés- en temps réel audit faisceau logique, pour permettre au terminal de recevoir et décoder des données utiles et de contrôle qui lui sont destinées.

18. Système spatial multifaisceaux de télécommunications selon la revendication 17, dans lequel
le module d'accès (308) au réseau spatial est configuré pour, dans la troisième étape, allouer une porteuse unique de canal descendant DL au faisceau logique dans lequel le terminal se trouve, et/ou
le terminal est configurée pour, dans une quatrième étape exécutée après la troisième étape, effectuer l'acquisition de la porteuse du canal de données de lien descendant DL suivant l'identifiant de fréquence porteuse qui lui a été transmis et se mettre à l'écoute d'éventuelles salves transmises sur cette porteuse DL qui lui sont éventuellement destinées ; puis
- le module d'accès (308) au réseau spatial est configuré pour, dans une cinquième étape consécutive à la quatrième étape, envoyer au terminal au travers du canal de données de lien descendant DL à la fréquence porteuse du faisceau logique auquel le terminal est associé, une ou plusieurs salves de données utiles et/ou de données contrôle du terminal et/ou de signalisation d'une nouvelle porteuse associé au faisceau logique de rattachement du terminal, ledit envoi étant effectué sur la pluralité du ou des faisceaux physiques d'émission du relai spatial qui logique à l'instant donné T recouvrent dans son entier et sont associés au faisceau logique du terminal.

19. Système spatial multifaisceaux de télécommunications selon la revendication 18, dans lequel les données de contrôle concernent la mise en oeuvre d'une partie ou de la totalité des mécanismes suivants :
- un mécanisme de contrôle de l'accès à contention sur le canal aléatoire de lien montant UL, incluant le contrôle de congestion et le contrôle de flux et prenant en compte la spécificité d'un canal de communication par satellite ou par station HAPS, avec sélection de temporisations et sélection d'un mode de transmission en fonction du type de données à transmettre ;
- un mécanisme spécifique de contrôle de puissance adapté au canal de communication de liaison montante UL ;
- un mécanisme de contrôle des dérives Doppler ;
- un mécanisme économiseur de l'énergie électrique du terminal basé sur la fourniture d'une information de rapport cyclique temporel, représentative d'un partage temporel d'une même fréquence de porteuse de canal de données de lien descendant DL par plusieurs faisceaux logiques desservies par un même satellite.

20. Système spatial multifaisceaux de télécommunications selon l'une quelconque des revendications 18 à 19, dans lequel
le terminal (6 ; 106 ; 306) est configuré pour, dans une sixième étape exécutée après la cinquième étape, envoyer au module d'accès au réseau spatial sur le canal de communication aléatoire de lien montant UL à une fréquence de porteuse voie montante une ou plusieurs salves de données ainsi que des informations concernant la localisation dudit terminal à un nouvel instant T+1 ; et/ou
- le module d'accès (308) au réseau spatial est configuré pour, dans une étape préalable à première étape, diffuser vers l'au moins un terminal qui se trouvent dans la couverture géographique globale du relais spatial et sur une balise de diffusion dont l'au moins un terminal connait déjà la fréquence porteuse, d'une part le plan de fréquences du système spatial multifaisceaux de télécommunications contenant une liste d'identifiants et de fréquences respectivement associées des porteuses de liens montants et de liens descendants, et éventuellement des informations d'aide à la localisation du ou des terminaux.

21. Système spatial multifaisceaux de télécommunications selon l'une quelconque des revendications 17 à 19, dans lequel
le faisceau logique (354) est une zone géographique simple, compacte et d'un seul tenant, ou
le faisceau logique (384) est un ensemble discret fini de zones géographiques élémentaires, compactes et d'un seul tenant, réparties suivant des distances d'espacement entre zones voisines prédéterminées, de manière préférée en une grappe ou plusieurs grappes.

22. Système spatial multifaisceaux de télécommunications selon l'une quelconque des revendications 17 à 21, dans lequel le système spatial multifaisceaux de télécommunications est un système satellite multifaisceaux (12) comportant un satellite ou une constellation de plusieurs satellites, le ou les satellites évoluant sur des orbites géostationnaires ou des orbites basses ou des orbites moyennes.

23. Système intégré de télécommunications comprenant intégrés :
le système spatial multifaisceaux de télécommunications (12; 112) défini selon l'une quelconque des revendications 17 à 22; et
au moins un système terrestre (14) mobile et cellulaire,
le système terrestre comportant :
- intégrés dans une ou deux stations sol terrestre(s), un relai radiofréquence RF terrestre cellulaire et une passerelle d'interconnexion entre le relai RF terrestre et l'infrastructure terrestre fixe commune, partagée avec le système spatial multifaisceaux de télécommunications ; et
- un module d'accès (308) au système terrestre, formé par le relai spatial multifaisceaux et la ou les deux stations, ledit module d'accès étant inclus dans la station ou l'une des deux stations terrestre, et
- au moins un terminal spatial utilisateur du système spatial multifaisceaux de télécommunications, configuré bi-mode ou multi-modes pour communiquer dans le système spatial multifaisceaux de télécommunications et/ou le système terrestre ;
le système intégré de télécommunications dans lequel
- le module d'accès (308) au réseau spatial est configuré pour, dans une étape préalable, diffuser vers l'au moins un terminal spatial utilisateur qui se trouvent dans la couverture géographique globale du relais spatial multifaisceaux d'une part le plan de fréquences du système spatial multifaisceaux de télécommunications contenant une liste d'identifiants et de fréquences respectivement associées des porteuses de liens montants et de liens descendants ;
- l'au moins un terminal spatial utilisateur (6 ; 106) est configuré pour
- dans une étape de lancement et d'exécution de balayage exécutée après l'étape préalable, balayer les balises de diffusion du système terrestre et/ou du système spatial multifaisceaux de télécommunications suivant un algorithme de balayage prédéterminé, et fournir une indication d'un mode de nouvelle connexion, pris parmi la connexion au système terrestre et au système spatial, et à sélectionner, cette indication étant fonction des disponibilités respectives du système terrestre et du système spatial multifaisceaux de télécommunications et d'une stratégie de sélection à base de priorités d'un système parmi le système terrestre et le système spatial multifaisceaux de télécommunications, puis
.* dans une étape de validation, valider l'indication du mode de connexion à sélectionner; ensuite
.* dans une étape de sélection du système de communication, se connecter au système terrestre lorsque le mode terrestre est sélectionné, et se connecter au système satellite lorsque le mode satellite est sélectionné, en exécutant l'ensemble des première et deuxième étapes définie dans la revendication 1 ou l'ensemble des première, deuxième, troisième, quatrième et cinquième étapes définies dans les revendications 1 à 6.

24. Module d'accès (308) à un système spatial, intégré dans un relai spatial ou dans une station sol GW servant de passerelle entre le système spatial et une infrastructure terrestre fixe, ledit module d'accès étant configuré pour :
- décoder une ou plusieurs salves de données émises par un terminal, 20 et associer au terminal un faisceau logique (354; 384) à partir d'informations de localisation dudit terminal fournies auparavant, le faisceau logique (354; 384) associé étant une zone géographique fixe prédéterminée dans laquelle le terminal se trouve à un instant actuel T et qui appartient à un pavage de la couverture géographique du système spatial en un ensemble de zones géographiques distinctes, dépourvues de recouvrement mutuel et formant chacune un faisceau logique différent , le module d'accès est en outre configuré pour :
- associer en temps réel au faisceau logique associé une pluralité d'un ou plusieurs faisceaux physiques d'émission du relai spatial qui à l'instant donné T recouvrent dans son entier ledit faisceau logique ; puis
- envoyer au terminal au travers d'une balise de diffusion dont le terminal connait déjà la fréquence porteuse, un identifiant d'une porteuse d'un canal de données de lien descendant DL, allouée au terminal, à son faisceau logique associé et à la pluralité des faisceaux physiques associés en temps réel audit faisceau logique, pour permettre au terminal de recevoir et décoder des données utiles et de contrôle qui lui sont destinées.

25. Module d'accès au système spatial selon la revendication 24, dans lequel
le module d'accès (308) au réseau spatial est configuré pour envoyer au terminal au travers du canal de données de lien descendant DL à la fréquence porteuse du faisceau logique auquel le terminal est associé, une ou plusieurs salves de données utiles et/ou de données contrôle du terminal et/ou de signalisation d'une nouvelle porteuse associé au faisceau logique de rattachement du terminal, ledit envoi étant effectué sur la pluralité du ou des faisceaux physiques d'émission du relai spatial qui logique à l'instant donné T recouvrent dans son entier et sont associés au faisceau logique du terminal.

## Patentansprüche

1. Raumkommunikationsverfahren, implementiert durch ein Mehrstrahl-Raumtelekommunikations system,
wobei das Mehrstrahl-Raumtelekommunikationssystem (12; 112) Folgendes umfasst:
- ein Mehrstrahl-Raumrelais (52; 152), ausgewählt aus einem Satelliten und einer Relaisplattform in großer Höhe HAPS; und
- eine Bodenstation (22; 122) GW, die als Verbindungsgateway zwischen einer festen terrestrischen Infrastruktur und dem Mehrstrahl-Raumrelais dient;
- ein Raumnetzzugangsmodul (308), gebildet durch das Mehrstrahl-Raumrelais und die Bodenstation, wobei das Zugangsmodul (308) an Bord des Mehrstrahl-Raumrelais mitgeführt wird, wenn das Mehrstrahl-Raumrelais regenerativ ist, oder sich in der Bodenstation GW befindet, wenn das Mehrstrahl-Raumrelais transparent oder zwischen dem Mehrstrahl-Raumrelais und der Bodenstation GW verteilt ist,
- ein Benutzerterminal (6; 106; 306),
wobei das Raumkommunikationsverfahren die folgenden Schritte umfasst:
- Aussenden, in einem ersten Schritt (316), durch das Benutzerterminal (306) zu einem gegebenen Zeitpunkt T auf einem Zufallskanal, von Uplink-(UL-)Daten, und in einem vorbestimmten Frequenzbereich zu dem Raumnetzzugangsmodul, eines oder mehrerer Datenbursts, die mehrheitlich aus Nutzverkehr bestehen, einschließlich einer Kennung und, wenn das Terminal seinen Standort bestimmen oder bei seiner Standortbestimmung helfen kann, expliziter oder impliziter geografischer Standortinformationen des Terminals; wobei das Raumkommunikationsverfahren **dadurch gekennzeichnet ist, dass** es ferner die folgenden Schritte umfasst:
- in einem zweiten Schritt (318), durch ein Raumnetzzugangsmodul (308):
Empfangen und Decodieren des oder der von dem Terminal ausgesendeten Datenbursts, Assoziieren eines logischen Strahls (354; 384) mit dem Terminal auf der Basis der Standortinformationen des Terminals, die im ersten Schritt (316) geliefert werden, wenn das Terminal seinen Standort bestimmen oder bei seiner Standortbestimmung helfen kann, oder von dem empfangenen Signal abgeleitet werden, das den oder die gesendeten Datenbursts trägt, wenn das Terminal nicht seinen Standort bestimmen oder bei seiner Standortbestimmung helfen kann, wobei der assoziierte logische Strahl (354; 384) eine vorbestimmte feste geografische Zone ist, in der sich das Terminal zum aktuellen Zeitpunkt T befindet und die zu einer Kachelung der geografischen Abdeckung des Mehrstrahl-Raumtelekommunikationssystems in eine Reihe von getrennten geografischen Zonen gehört, die sich nicht gegenseitig überlappen und jeweils einen anderen logischen Strahl bilden, und
in Echtzeit Assoziieren einer Vielzahl von einem oder mehreren physischen Sendestrahlen des Raumrelais mit dem assoziierten logischen Strahl, die zum gegebenen Zeitpunkt T den assoziierten logischen Strahl vollständig überlappen; und dann
- Senden, in einem dritten Schritt (320), durch das Raumnetzzugangsmodul (308) über eine Rundsendebake, deren Trägerfrequenz dem Terminal bereits bekannt ist, einer Kennung eines Trägers eines Downlink-(DL-)Datenkanals, der dem Terminal, seinem assoziierten logischen Strahl und der Vielzahl der mit dem logischen Strahl in Echtzeit assoziierten physischen Strahlen zugewiesen ist, zu dem Terminal, um es zuzulassen, dass das Terminal die für das Terminal bestimmten Nutz- und Steuerdaten empfängt und decodiert.

2. Raumkommunikationsverfahren nach Anspruch 1, wobei
der erste Schritt (316) eine erste Phase des Eintritts in das Raumnetz mit der Aussendung eines oder mehrerer Signalisierungsdatenbursts über den Zufallskanal und eine zweite Phase der Übertragung eines oder mehrerer Datenbursts über einen den Zufallskanal oder einen bestimmten Zugang verwendenden Zufallszugang umfasst.

3. Raumkommunikationsverfahren nach einem der Ansprüche 1 bis 2, wobei
im dritten Schritt (320) ein einzelner abwärtsgehender (DL-)Kanalträger vom Raumnetzzugangsmodul dem logischen Strahl, in dem sich das Terminal befindet, und seiner Vielzahl der in Echtzeit assoziierten physischen Strahlen zugewiesen wird.

4. Raumkommunikationsverfahren nach einem der Ansprüche 1 bis 3, das ferner die folgenden Schritte umfasst:
- Bewerkstelligen, in einem vierten Schritt (322), ausgeführt nach dem dritten Schritt (320), durch das Terminal (306), der Erfassung des Trägers des Downlink-(DL-)Datenkanals gemäß der zu ihm übertragenen Trägerfrequenzkennung und Anfangen mit dem Horchen auf eventuelle auf diesem DL-Träger übertragene, eventuell für ihn bestimmte Bursts; und dann
- Senden, in einem fünften Schritt (324), durch das Raumnetzzugangsmodul (308), zu dem Terminal über den Downlink-(DL-)Datenkanal auf der Trägerfrequenz des logischen Strahls, mit dem das Terminal assoziiert ist, eines oder mehrerer Nutzdaten- und/oder Steuerdatenbursts des Terminals und/oder Signalisierungsdaten eines neuen Trägers, der mit dem logischen Strahl assoziiert ist, mit dem das Terminal verbunden ist, wobei das Senden über die in Echtzeit assoziierte Vielzahl des physischen Sendestrahls oder der physischen Sendestrahlen des Raumrelais erfolgt, die zu dem gegebenen Zeitpunkt T den logischen Strahl des Terminals vollständig überlappen und damit assoziiert sind.

5. Raumkommunikationsverfahren nach Anspruch 4, wobei
die Steuerdaten die Implementierung betreffen von:
einem Konkurrenz-Zugangskontrollmechanismus auf dem Uplink-(UL-)Zufallskanal, einschließlich Überlastungskontrolle und Flusskontrolle und unter Berücksichtigung der Spezifizitäten eines Kommunikationskanals über Satellit oder über eine HAPS-Station, mit Auswahl von Verzögerungen und Auswahl eines Übertragungsmodus in Abhängigkeit vom Typ der zu übertragenden Daten; und/oder
einem spezifischen Leistungssteuerungsmechanismus, der an den Uplink-(UL-)Kommunikationskanal angepasst ist; und/oder
einem Doppler-Drift-Kontrollmechanismus; und/oder
einem Mechanismus zum Sparen von elektrischer Energie des Terminals auf der Basis der Lieferung einer Information über das zeitliche Tastverhältnis, das für die zeitliche Aufteilung einer gleichen Trägerfrequenz des Downlink-(DL-)Datenkanals durch mehrere von demselben Satelliten bediente logische Strahlen repräsentativ ist.

6. Raumkommunikationsverfahren nach Anspruch 5, wobei die Steuerdaten betreffend die Implementierung des Stromsparmechanismus des Terminals in einem spezifischen Signalisierungskopf signalisiert werden, der die beiden folgenden Informationen enthält:
- eine nächste abwärtsgehende Frequenz, next frequency burst DL, die das Terminal horchen soll, bezogen auf eine(n) bekannte(n) Frequenzkanalindex oder - nummer oder einen relativen Frequenzwert in Bezug auf eine aktuelle Frequenz; und
- eine nächste Startzeit, next start burst DL, ab der das Terminal horchen soll, wobei die nächste Startzeit die Startzeit des nächsten abwärtsgehenden -(DL-)Bursts angibt und durch eine mehrfache Anzahl von Bursts ab dem Ende des aktuell abgehörten Bursts ausgedrückt werden kann.

7. Raumkommunikationsverfahren nach einem der Ansprüche 4 bis 6, das ferner einen sechsten Schritt (326) umfasst, der nach dem fünften Schritt (324) ausgeführt wird, und wobei:
das Terminal (306) über den Uplink-(UL-)Zufallskommunikationskanal einen oder mehrere Datenbursts sowie Informationen über den Standort des Terminals zu einem neuen Zeitpunkt T+1 zu dem Raumnetzzugangsmodul sendet.

8. Raumkommunikationsverfahren nach einem der Ansprüche 1 bis 7, das einen dem ersten Schritt (316) vorausgehenden Schritt (314) umfasst, wobei
das Zugangsmodul (308) zu dem mindestens einen Terminal (306), das sich in der globalen geografischen Abdeckung des Raumrelais befindet, und auf einer Rundsendebake, deren Trägerfrequenz dem mindestens einen Terminal bereits bekannt ist, einerseits den Frequenzplan des Raumsystems, der eine Liste von Kennungen und Frequenzen enthält, die jeweils mit den Uplink- und Downlink-Trägern assoziiert sind, und andererseits Hilfsinformationen für die Bestimmung des Standorts des oder der Terminals rundsendet.

9. Raumkommunikationsverfahren nach einem der Ansprüche 1 bis 8, wobei
der logische Strahl (354) ein einfaches, kompaktes und zusammenhängendes geografisches Gebiet ist, oder
der logische Strahl (384) ein diskreter, endlicher Satz von elementaren, kompakten, zusammenhängenden geografischen Gebieten (384₁, 384₂, 384₃, 384₄, 384₅, 384₆, 384₇) ist, die gemäß vorbestimmten Abständen zwischen benachbarten Gebieten verteilt sind, vorzugsweise in einem oder mehreren Clustern.

10. Raumkommunikationsverfahren nach Anspruch 9, wobei
die Form eines einfachen oder elementaren geografischen Gebiets polygonal, vorzugsweise quadratisch oder rechteckig oder rautenförmig oder dreieckig oder sechseckig oder kreisförmig oder elliptisch ist.

11. Raumkommunikationsverfahren nach einem der Ansprüche 9 bis 10, wobei
der logische Strahl (384) eine ganze Zahl von kompakten, zusammenhängenden, isotrop und homogen verteilten elementaren geografischen Gebieten ist, wobei die ganze Zahl von elementaren geografischen Gebieten vorzugsweise zwischen 2 und 25 liegt.

12. Raumkommunikationsverfahren nach einem der Ansprüche 1 bis 11, wobei
das Mehrstrahl-Raumtelekommunikationssystem (12; 112) zur Integration in ein integriertes Telekommunikationssystem konfiguriert ist, wobei das integrierte Telekommunikationssystem (2; 102) zusätzlich zu dem Mehrstrahl-Raumtelekommunikationssystem mindestens ein terrestrisches System (14) umfasst, mobil und zellular,
wobei das terrestrische System Folgendes aufweist:
- ein zellulares, terrestrisches Radiofrequenz-(RF-)relais, integriert in eine oder zwei Bodenstationen, und ein Verbindungsgateway zwischen dem terrestrischen RF-Relais und einer gemeinsamen festen terrestrischen Infrastruktur, die mit dem Mehrstrahl-Raumtelekommunikationssystem gemeinsam genutzt wird; und
- ein Terrestrisches-System-Zugangsmodul, gebildet von dem terrestrischen RF-Relais und der einen oder den zwei Stationen, wobei das Zugangsmodul in der terrestrischen Station oder einer der beiden terrestrischen Stationen eingeschlossen ist; und
- mindestens ein Benutzer-Raumterminal (6; 106; 306) des Mehrstrahl-Raumtelekommunikationssystems, Bimodus- oder Multimodus-konfiguriert zum Kommunizieren innerhalb des Mehrstrahl-Raumtelekommunikationssystems und/oder des terrestrischen Systems;
wobei das Raumkommunikationsverfahren die folgenden Schritte umfasst, die vor dem ersten Schritt ausgeführt werden:
- Rundsenden, in einem Vorabschritt (418) durch das Zugangsmodul, zu dem mindestens einen Terminal, das sich in der globalen geografischen Abdeckung des Mehrstrahl-Raumrelais befindet, eines Frequenzplans des Mehrstrahl-Raumtelekommunikationssystems, der eine Liste von Kennungen und Frequenzen enthält, die jeweils mit den Uplink- und Downlink-Trägern assoziiert sind; dann
- Abtasten, in einem Schritt (418) des Startens und Ausführens einer Abtastung, der Rundsendebaken des terrestrischen Systems und/oder des Mehrstrahl-Raumtelekommunikationssystems von mindestens einem Benutzer-Raumterminal gemäß einem vorbestimmten Abtastalgorithmus (482), und es wird eine Anzeige eines Neuverbindungsmodus, ausgewählt aus der Verbindung mit dem terrestrischen System und dem Raumsystem, und zum Auswählen geliefert, wobei diese Anzeige von der jeweiligen Verfügbarkeiten des terrestrischen Systems und des Mehrstrahl-Raumtelekommunikationssystems und von einer auf Prioritäten basierenden Auswahlstrategie von einem System aus dem terrestrischen System und dem Mehrstrahl-Raumtelekommunikationssystem abhängt, dann
- Validieren, in einem Validierungsschritt (422), der Anzeige des auszuwählenden Verbindungsmodus durch das mindestens eine Benutzer-Raumterminal; dann
- Verbinden, in einem Schritt (424) des Auswählens des Kommunikationssystems durch das Benutzer-Raumterminal, wenn der terrestrische Modus ausgewählt ist, des Terminals mit dem terrestrischen System, und wenn der Satellitenmodus ausgewählt ist, des Terminals mit dem Satellitensystem unter Ausführung der Gesamtheit der ersten und zweiten Schritte oder der Gesamtheit der ersten, zweiten, dritten, vierten und fünften Schritte.

13. Raumkommunikationsverfahren nach Anspruch 12, das einen Schritt (456) des Umschaltens der Hardware- und Softwarekonfiguration des Terminals von einem an die Uplink- und Downlink-Kanäle des terrestrischen Systems angepassten Modus auf einen an die Uplink- und Downlink-Kanäle des Mehrstrahl-Raumtelekommunikationssystems angepassten Modus umfasst, wobei der Schritt des Umschaltens zwischen dem Kommunikationssystemauswahlschritt und dem ersten Schritt (458) geschaltet ist und durch Anwenden neuer Parameter der PHY/MAC-Schicht und neuer Raumkanalspezifischer Algorithmen ohne Änderung der RF-Kette und der Wellenform durchgeführt wird.

14. Raumkommunikationsverfahren nach einem der Ansprüche 12 bis 13, das einen Schritt (462) der Kontrolle der Aufrechterhaltung der Raumkommunikation, periodisch aktiviert nach einer Verzögerung von vorbestimmter Dauer, in deren Verlauf
die Rundsendebaken des terrestrischen Systems und/oder des Mehrstrahl-Raumtelekommunikationssystems nach dem vorbestimmten Abtastalgorithmus (482) abgetastet werden, und eine Anzeige eines auszuwählenden Neuverbindungsmodus, ausgewählt aus der Verbindung mit dem terrestrischen System und dem Raumsystem, geliefert wird, wobei diese Anzeige von den jeweiligen Verfügbarkeiten des terrestrischen Systems und des Mehrstrahl-Raumtelekommunikationssystems und der auf Prioritäten basierenden Auswahlstrategie eines Systems aus dem terrestrischen System und dem Mehrstrahl-Raumtelekommunikationssystem abhängt, und
wenn die gelieferte Anzeige der Raummodus ist, die Kommunikation über das Raumnetz aufrechterhalten wird.

15. Raumkommunikationsverfahren nach Anspruch 14,
wobei, wenn die gelieferte Anzeige des Neuverbindungsmodus der terrestrische Modus ist, eine Umschaltung der Kommunikation auf das terrestrische Mobilfunknetz durchgeführt wird, ohne die Kommunikation zu unterbrechen.

16. Kommunikationsverfahren nach einem der Ansprüche 12 bis 13, wobei eine Strategie zur Auswahl des Neuverbindungsmodus auf der Priorität des terrestrischen Verbindungsmodus gegenüber dem Raumverbindungsmodus basiert.

17. Mehrstrahl-Raumtelekommunikationssystem (2; 112), das Folgendes umfasst:
- ein Mehrstrahl-Raumrelais (52; 152), ausgewählt aus einem Satelliten und einer Relaisplattform in großer Höhe HAPS; und
- eine Bodenstation (22; 122) GW, die als Verbindungsgateway zwischen einer festen terrestrischen Infrastruktur und dem Mehrstrahl-Raumrelais dient;
- ein Raumnetzzugangsmodul (308), gebildet durch das Mehrstrahl-Raumrelais und die Bodenstation, wobei das Zugangsmodul an Bord des Mehrstrahl-Raumrelais mitgeführt wird, wenn das Mehrstrahl-Raumrelais regenerativ ist, oder sich in der Bodenstation GW befindet, wenn das Mehrstrahl-Raumrelais transparent ist,
- mindestens ein Benutzer-Raumterminal (6; 106; 306),
wobei das Terminal (6; 106; 306) konfiguriert ist zum Aussenden, in einem ersten Schritt zu einem gegebenen Zeitpunkt T auf einem Uplink-(UL-)Datenzufallskanal und in einem vorbestimmten Frequenzbereich zu dem Raumnetzzugangsmodul, eines oder mehrerer Datenbursts mehrheitlich aus Nutzverkehr, einschließlich einer Kennung und, wenn das Terminal seinen Standort bestimmen oder bei seiner Standortbestimmung helfen kann, expliziter oder impliziter Informationen über den geografischen Standort des Terminals;
das Raumnetzzugangsmodul (308) konfiguriert ist zum:
- Empfangen und Decodieren, in einem zweiten Schritt, der dem ersten Schritt folgt, des oder der vom Terminal gesendeten Datenbursts, Assoziieren eines logischen Strahls (354; 384) mit dem Terminal auf der Basis der im ersten Schritt gelieferten Standortinformationen des Terminals, wenn das Terminal seinen Standort bestimmen oder bei seiner Standortbestimmung helfen kann, oder die aus dem empfangenen Signal abgeleitet wurden, das den oder die gesendeten Datenbursts trägt, wenn das Terminal seinen Standort nicht bestimmen oder bei seiner Standortbestimmung helfen kann, wobei der assoziierte logische Strahl (354; 384) ein vorbestimmtes festes geografisches Gebiet ist, in der sich das Terminal zum aktuellen Zeitpunkt T befindet und die zu einer Kachelung der geografischen Abdeckung des Mehrstrahl-Raumtelekommunikationssystems in eine Reihe von getrennten geografischen Zonen gehört, die sich nicht gegenseitig überlappen und jeweils einen anderen logischen Strahl bilden, und
Assoziieren, in Echtzeit, mit dem assoziierten logischen Strahl einer Vielzahl von einem oder mehreren physischen Sendestrahlen des Raumrelais, die zu dem gegebenen Zeitpunkt T den assoziierten logischen Strahl vollständig überlappen; dann
- Senden, in einem dritten Schritt, zu dem Terminal über eine Sendebake, deren Trägerfrequenz dem Terminal bereits bekannt ist, einer Kennung eines Trägers eines Downlink-(DL-)Datenkanals, der dem Terminal, seinem assoziierten logischen Strahl und der Vielzahl von mit dem logischen Strahl in Echtzeit assoziierten physischen Strahlen zugewiesen ist, um es zuzulassen, dass das Terminal für das Terminal bestimmte Nutz- und Steuerdaten empfängt und decodiert.

18. Mehrstrahl-Raumtelekommunikationssystem nach Anspruch 17, wobei
das Raumnetzzugangsmodul (308) zum Zuweisen, im dritten Schritt, eines einzelnen abwärtsgehenden (DL-)Kanalträgers zu dem logischen Strahl, in dem sich das Terminal befindet, konfiguriert ist, und/oder
das Terminal zum Bewerkstelligen, in einem vierten Schritt, der nach dem dritten Schritt ausgeführt wird, der Erfassung des Trägers des Downlink-(DL)-Datenkanals gemäß der zu dem Terminal übertragenen Trägerfrequenzkennung, und zum Anfangen mit dem Horchen auf eventuelle, für das Terminal bestimmte auf diesem DL-Träger eventuell übertragene Bursts konfiguriert ist; und dann
- das Raumnetzzugangsmodul (308) zum Senden, in einem fünften Schritt, der dem vierten Schritt folgt, zu dem Terminal über den Downlink-(DL-)Datenkanal mit der Trägerfrequenz des logischen Strahls, mit dem das Terminal verbunden ist, eines oder mehrerer Nutzdaten- und/oder Steuerdatenbursts des Terminals und/oder Signalisierungsdaten eines neuen Trägers konfiguriert ist, wobei das Senden über die in Echtzeit assoziierte Vielzahl des physischen Sendestrahls oder der physischen Sendestrahlen des Raumrelais erfolgt, die logischerweise zu dem gegebenen Zeitpunkt T den logischen Strahl des Terminals vollständig überlappen und damit assoziiert sind.

19. Mehrstrahl-Raumtelekommunikationssystem nach Anspruch 18, wobei die Steuerdaten die Implementierung eines Teils oder der Gesamtheit der folgenden Mechanismen betreffen von:
- einem Konkurrenz-Zugangskontrollmechanismus auf dem Uplink-(UL-)Zufallskanal einschließlich Überlastungssteuerung und Flusssteuerung und unter Berücksichtigung der Spezifizität eines Kommunikationskanals über Satellit oder HAPS-Station, mit der Auswahl von Verzögerungen und der Auswahl eines Übertragungsmodus in Abhängigkeit vom Typ der zu übertragenden Daten;
- einem spezifischen Leistungssteuerungsmechanismus, der an den Uplink-(UL-)Kommunikationskanal angepasst ist;
- einem Doppler-Drift-Kontrollmechanismus;
- einem Mechanismus zum Sparen von elektrischer Energie des Terminals auf der Basis der Lieferung einer Information über das zeitliche Tastverhältnis, das für die zeitliche Aufteilung einer gleichen Trägerfrequenz des Downlink-(DL-)Datenkanals durch mehrere von demselben Satelliten bediente logische Strahlen repräsentativ ist.

20. Mehrstrahl-Raumtelekommunikationssystem nach einem der Ansprüche 18 bis 19, wobei
das Terminal (6; 106; 306) zum Senden, in einem sechsten Schritt, der nach dem fünften Schritt ausgeführt wird, zum Raumnetzzugangsmodul auf dem Uplink-(UL-)Kommunikationszufallskanal mit einer ansteigenden Trägerfrequenz, eines oder mehrerer Datenbursts sowie Informationen über den Standort des Terminals zu einem neuen Zeitpunkt T+1 konfiguriert ist; und/oder
- das Raumnetzzugangsmodul (308) zum Rundsenden, in einem dem ersten Schritt vorangehenden Schritt, zu dem mindestens einen Terminal, das sich in der globalen geografischen Abdeckung des Raumrelais und auf einer Rundsendebake befindet, deren Trägerfrequenz dem mindestens einen Terminal bereits bekannt ist, einerseits des Frequenzplans des Mehrstrahl-Raumtelekommunikationssystems, der eine Liste von Kennungen und Frequenzen enthält, die jeweils mit den Uplink- und Downlink-Trägern assoziiert sind, sowie eventuell Informationen zur Unterstützung der Bestimmung des Standorts des oder der Terminals konfiguriert ist.

21. Mehrstrahl-Raumtelekommunikationssystem nach einem der Ansprüche 17 bis 19, wobei
der logische Strahl (354) ein einfaches, kompaktes und zusammenhängendes geografisches Gebiet ist, oder
der logische Strahl (384) eine diskrete, endliche Menge von elementaren, kompakten, zusammenhängenden geografischen Gebieten ist, die gemäß vorbestimmten Abständen zwischen benachbarten Gebieten verteilt sind, vorzugsweise in einem oder mehreren Clustern.

22. Mehrstrahl-Raumtelekommunikationssystem nach einem der Ansprüche 17 bis 21, wobei
das Mehrstrahl-Raumtelekommunikationssystem ein Mehrstrahl-Satellitensystem (12) ist, das einen Satelliten oder eine Konstellation aus mehreren Satelliten aufweist, wobei der oder die Satellit(en) auf geostationären Umlaufbahnen oder niedrigen Umlaufbahnen oder mittleren Umlaufbahnen fliegen.

23. Integriertes Telekommunikationssystem, das darin integriert Folgendes umfasst:
das Mehrstrahl-Raumtelekommunikationssystem (12; 112), definiert nach einem der Ansprüche 17 bis 22; und
mindestens ein mobiles und zellulares terrestrisches System (14),
wobei das terrestrische System Folgendes umfasst:
- integriert in eine oder zwei terrestrische Bodenstationen ein zellulares terrestrisches Radiofrequenz-RF-Relais und ein Verbindungsgateway zwischen dem terrestrischen RF-Relais und der gemeinsamen festen terrestrischen Infrastruktur, die mit dem Mehrstrahl-Raumtelekommunikationssystem gemeinsam genutzt wird; und
- ein Terrestrisches-System-Zugangsmodul (308), gebildet durch das Mehrstrahl-Raumrelais und die eine oder zwei Stationen, wobei das Zugangsmodul in der Station oder einer der beiden terrestrischen Stationen eingeschlossen ist, und
- mindestens ein Benutzer-Raumterminal des Mehrstrahl-Raumtelekommunikationssystems, Bimodus- oder Multimodus-konfiguriert zum Kommunizieren innerhalb des Mehrstrahl-Raumtelekommunikationssystems und/oder des terrestrischen Systems;
das integrierte Telekommunikationssystem, wobei:
- das Raumnetzzugangsmodul (308) zum Rundsenden, in einem vorhergehenden Schritt, zu dem mindestens einen Benutzer-Raumterminal, das sich in der globalen geografischen Abdeckung des Mehrstrahl-Raumrelais befindet, einerseits des Frequenzplans des Mehrstrahl-Raumkommunikationssystems konfiguriert ist, der eine Liste von Kennungen und Frequenzen enthält, die jeweils mit den Uplink- und Downlink-Trägern assoziiert sind;
- das mindestens eine Benutzer-Raumterminal (6; 106) konfiguriert ist zum:
- Abtasten, in einem nach dem vorhergehenden Schritt ausgeführten Abtaststart- und -ausführungsschritt, der Rundsendebaken des terrestrischen Systems und/oder des Mehrstrahl-Raumtelekommunikationssystems nach einem vorbestimmten Abtastalgorithmus, und Liefern einer Anzeige eines Neuverbindungsmodus, ausgewählt aus der Verbindung mit dem terrestrischen System und dem Raumsystem, und auszuwählen, wobei diese Anzeige von den jeweiligen Verfügbarkeiten des terrestrischen Systems und des Mehrstrahl-Raumtelekommunikationssystems und einer Strategie zur Auswahl eines Systems aus dem terrestrischen System und dem Mehrstrahl-Raumtelekommunikationssystem auf der Basis von Prioritäten abhängt, dann
.^{∗} Validieren, in einem Validierungsschritt, der Anzeige des auszuwählenden Verbindungsmodus; danach
.^{∗} Verbinden, in einem Kommunikationssystemauswahlschritt, mit dem terrestrischen System, wenn der terrestrische Modus ausgewählt ist, und Verbinden mit dem Satellitensystem, wenn der Satellitenmodus ausgewählt ist, durch Ausführen der Gesamtheit der ersten und zweiten Schritte, die in Anspruch 1 definiert sind, oder der Gesamtheit der ersten, zweiten, dritten, vierten und fünften Schritte, die in den Ansprüchen 1 bis 6 definiert sind.

24. Raumsystemzugangsmodul (308), integriert in ein Raumrelais oder in eine Bodenstation GW, die als Gateway zwischen dem Raumsystem und einer festen terrestrischen Infrastruktur dient, wobei das Zugangsmodul konfiguriert ist zum:
- Decodieren eines oder mehrerer von einem Terminal gesendeter Datenbursts und Assoziieren eines logischen Strahls (354; 384) auf der Basis von zuvor gelieferten Standortinformationen des Terminals mit dem Terminal, wobei der assoziierte logische Strahl (354; 384) ein vorbestimmtes festes geografisches Gebiet ist, in dem sich das Terminal zu einem aktuellen Zeitpunkt T befindet und das zu einer Kachelung der geografischen Abdeckung des Raumsystems in einer Gesamtheit von getrennten geografischen Zonen ohne gegenseitige Überlappung gehört, die jeweils einen anderen logischen Strahl bildet, wobei das Zugriffsmodul ferner konfiguriert ist zum:
- Assoziieren, in Echtzeit, einer Vielzahl von einem oder mehreren physischen Sendestrahlen des Raumrelais mit dem assoziierten logischen Strahl, die zum gegebenen Zeitpunkt T den logischen Strahl vollständig überlappen; und dann
- Senden, zu dem Terminal, über eine Rundsendebake, deren Trägerfrequenz dem Terminal bereits bekannt ist, einer Kennung eines Trägers eines Downlink-(DL-)Datenkanals, der dem Terminal, seinem assoziierten logischen Strahl und der Vielzahl der mit dem logischen Strahl in Echtzeit assoziierten physischen Strahlen zugewiesen ist, um es zuzulassen, dass das Terminal die Nutz- und Steuerdaten empfängt und decodiert, die für ihn bestimmt sind.

25. Raumsystemzugangsmodul nach Anspruch 24, wobei
das Raumnetzzugangsmodul (308) zum Senden, zu dem Terminal über den Downlink-(DL-)Datenkanal mit der Trägerfrequenz des logischen Strahls, mit dem das Terminal assoziiert ist, eines oder mehrerer Nutzdaten- und/oder Steuerdatenbursts des Terminals und/oder Signalisierungsdaten eines neuen Trägers, der mit dem logischen Strahl assoziiert ist, mit dem das Terminal verbunden ist, konfiguriert ist, wobei das Senden auf der Vielzahl des physischen Sendestrahls oder der physischen Sendestrahlen des Raumrelais erfolgt, die logischerweise zu dem gegebenen Zeitpunkt T den logischen Strahl des Terminals vollständig überlappen und damit assoziiert sind.

## Claims

1. A method of space communication implemented by a multibeam telecommunications space system,
the multibeam telecommunications space system (12; 112) comprising:
- a multibeam space relay (52; 152) taken from among a satellite and a high-altitude relay platform HAPS; and
- a ground station (22; 122) GW, serving as interconnection gateway between a fixed terrestrial infrastructure and the multibeam space relay;
- an access module (308) for accessing the space network composed of the multibeam space relay and the ground station, said access module (308) being embedded on board the multibeam space relay when the multibeam space relay is regenerative or embedded in the ground station GW when the multibeam space relay is transparent or distributed between the multibeam space relay and the ground station GW,
- a user terminal (6; 106; 306),
the method of space communication comprising the following steps:
- in a first step (316), the user terminal (306) emits, at a given time T, on a random uplink UL data channel and in a predetermined span of frequencies, to the space network access module one or several bursts of data predominantly on useful traffic, including an identifier and, when the terminal is able to determine its geo-location or to aid in its geo-location, explicit or implicit information regarding the geographical location of said terminal; said method of space communication being **characterised in that** it further comprises the following steps:
- in a second step (318), the space network access module (308):
receives and decodes the burst or bursts of data emitted by the terminal, associates with the terminal a logical beam (354; 384) on the basis of location information of said terminal provided in the first step (316) when the terminal is able to determine its geo-location or to aid in its geo-location, or derived from the received signal carrying the burst or bursts of data emitted when the terminal is not able to determine or to aid in its geo-location, the associated logical beam (354; 384) being a predetermined fixed geographical area in which the terminal lies at the given time T and which belongs to a tiling of the geographical coverage of the multibeam telecommunications space system into a set of distinct geographical areas, which are devoid of any mutual overlap and each form a different logical beam, and
associates, in real time, with the associated logical beam a plurality of one or more physical emission beams of the space relay which, at the given time T, overlap the entirety of said associated logical beam; then
- in a third step (320), the space network access module (308) sends to the terminal, through a broadcasting beacon whose carrier frequency the terminal already knows, an identifier of a downlink DL data channel carrier allocated to the terminal, to its associated logical beam and to the plurality of the physical beams associated in real time with said logical beam, to allow the terminal to receive and decode useful and control data which are intended for it.

2. The method of space communication according to claim 1, wherein
the first step (316) comprises a first phase of entry into the space network with emission of one or more bursts of signaling data on the random channel and a second phase of transmitting one or more bursts of data on a random access which uses the random channel or a deterministic access.

3. The method of space communication according to any one of claims 1 to 2, wherein
in the third step (320), a downgoing DL unique channel carrier is allocated by the space network access module to the logical beam in which the terminal lies and to its plurality of the physical beams associated in real time.

4. The method of space communication according to any one of claims 1 to 3, further comprising the following steps:
- in a fourth step (322), executed after the third step (320), the terminal (306) performs the acquisition of the carrier of the downlink DL data channel according to the carrier frequency identifier which was transmitted to it and starts listening for possible bursts transmitted on this DL carrier which are possibly intended for it; then
- in a fifth step (324), the space network access module (308) sends to the terminal through the downlink DL data channel, at the carrier frequency of the logical beam with which the terminal is associated, one or more bursts of useful data and/or of control data of the terminal and/or of data for signaling a new carrier, associated with the logical beam of attachment of the terminal, said sending being performed on the real-time associated plurality of the physical emission beam or beams of the space relay which, at the given time T, overlap the entirety of and are associated with the logical beam of the terminal.

5. The method of space communication according to claim 4, wherein
the control data relate to the implementation:
of a mechanism to control the contention access on the random uplink UL channel, including congestion control and stream control and taking into account the specifics of a satellite-based or HAPS station-based communication channel, with selection of delays and selection of a mode of transmission as a function of the type of data to be transmitted; and/or
of a specific power control mechanism suited to the uplink UL communication channel; and/or
of a Doppler drift control mechanism; and/or
of an mechanism for saving electrical energy of the terminal based on the provision of a piece of temporal duty cycle information representative of a temporal sharing of one and the same downlink DL data channel carrier frequency by several logical beams served by one and the same satellite.

6. The method of space communication according to claim 5, wherein the control data relating to the implementation of the mechanism for saving electrical energy of the terminal are signalled in a specific signalling header containing the following two pieces of information:
- a next downgoing frequency, next frequency burst DL, that the terminal must listen for, referenced to a known frequency channel index or number or a relative frequency value with respect to a current frequency; and
- a next start time, next start burst DL, from which the terminal must listen, the next start time indicating the start time of the next downgoing DL burst and being able to be expressed by a multiple number of bursts from the end of the current burst that is being listened to.

7. The method of space communication according to any one of claims 4 to 6, further comprising a sixth step (326), executed after the fifth step (324), and wherein:
the terminal (306) sends to the space network access module on the random uplink UL communication channel one or more bursts of data as well as information relating to the location of said terminal at a new time T+1.

8. The method of space communication according to any one of claims 1 to 7, comprising a prior step (314) previous to the first step (316) wherein
the access module (308) broadcasts to the at least one terminal (306) which lies in the global geographical coverage of the space relay and on a broadcasting beacon whose carrier frequency the at least one terminal already knows, on the one hand the frequency plan of the space system containing a list of identifiers and of respectively associated frequencies of the carriers of uplinks and of downlinks, and on the other hand information for aiding in locating the terminal or terminals.

9. The method of space communication according to any one of claims 1 to 8, wherein
the logical beam (354) is a simple, compact geographical area in one piece, or
the logical beam (384) is a finite discrete set of compact elementary geographical areas (384₁, 384₂, 384₃, 384₄, 384₅, 384₆, 384₇) in one piece, distributed according to spacing distances between neighbouring areas that are predetermined, preferably in a cluster or several clusters.

10. The method of space communication according to claim 9, wherein
the shape of a geographical area, simple or elementary, is polygonal, preferably square or rectangular or lozenge or triangular or hexagonal, or circular or elliptical.

11. The method of space communication according to any one of claims 9 to 10, wherein
the logical beam (384) is an integer number of compact elementary geographical areas in one piece, distributed in an isotropic and homogeneous manner, the integer number of elementary geographical areas preferably being between 2 and 25.

12. The method of space communication according to any one of claims 1 to 11, wherein
the multibeam telecommunications space system (12; 112) is configured to be integrated into an integrated telecommunications system, the integrated telecommunications system (2; 102) comprising, in addition to the multibeam telecommunications space system, at least one, mobile and cellular, terrestrial system (14), the terrestrial system having:
- integrated into one or two terrestrial ground stations, a cellular terrestrial radiofrequency (RF) relay and an interconnection gateway between the terrestrial RF relay and a common fixed terrestrial infrastructure, shared with the multibeam telecommunications space system; and
- an access module for accessing the terrestrial system, formed by the terrestrial RF relay and the station or the two stations, said access module being included in the terrestrial station or one of the two stations, and
- at least one user space terminal (6; 106; 306) of the multibeam telecommunications space system configured in dual-mode or multi-mode to communicate in the multibeam telecommunications space system and/or the terrestrial system;
the method of space communication comprising the following steps executed before the first step:
- in a prior step (418), the access module broadcasts to the at least one terminal which lies in the global geographical coverage of the multibeam space relay a frequency plan of the multibeam telecommunications space system containing a list of identifiers and of respectively associated frequencies of the carriers of uplinks and of downlinks; then
- in a step (418) of scan launch and execution, the broadcasting beacons of the terrestrial system and/or of the multibeam telecommunications space system are scanned by the at least one user space terminal according to a predetermined scanning algorithm (482), and an indication of a mode of new connection, taken from among connection to the terrestrial system and to the space system, and to be selected is provided, this indication being dependent on the respective availabilities of the terrestrial system and the multibeam telecommunications space system and on a selection strategy based on priorities of a system from among the terrestrial system and the multibeam telecommunications space system, then
- in a validation step (422), the indication of the mode of connection to be selected is validated by the at least one user space terminal; thereafter
- in a step (424) of selecting the communication system by the user space terminal, when the terrestrial mode is selected, the terminal is connected to the terrestrial system, and when the satellite mode is selected, the terminal is connected to the satellite system by executing the set of first and second steps or the set of the first, second, third, fourth and fifth steps.

13. The method of space communication according to claim 12, comprising a step (456) of switching the hardware and software configuration of the terminal from a mode suited to the channels of the uplinks and downlinks of the terrestrial system to a mode suited to the channels of the uplinks and downlinks of the multibeam telecommunications space system, the switching step being interposed between the step of selecting the communication system and the first step (458), and being performed by applying new PHY/MAC layer parameters and new specific algorithms of the space channels without changing RF chain and waveform.

14. The method of space communication according to any one of claims 12 to 13, comprising a step (462) of controlling that the space communication, activated periodically according to a delay of predetermined duration, is maintained, during which
the broadcasting beacons of the terrestrial system and/or of the multibeam telecommunications space system are scanned according to the predetermined scanning algorithm (482), and an indication of a mode of new connection, taken from among connection to the terrestrial system and to the space system, and to be selected is provided, this indication being dependent on the respective availabilities of the terrestrial system and the multibeam telecommunications space system and on the selection strategy based on priorities of a system from among the terrestrial system and the multibeam telecommunications space system, and
when the indication provided is the space mode, the communication is maintained on the space network.

15. The method of space communication according to claim 14, wherein, when the indication provided of the mode of the new connection is the terrestrial mode, a switching of the communication on the terrestrial mobile network is performed without interrupting said communication.

16. The method of communication according to any one of claims 12 to 13, wherein a strategy for selecting the mode of a new connection is based on the priority of the terrestrial mode of connection with respect to the space mode of connection.

17. A multibeam telecommunications space system (2, 112) comprising:
- a multibeam space relay (52; 152) taken from among a satellite and a high-altitude relay platform HAPS; and
- a ground station (22; 122) GW, serving as interconnection gateway between a fixed terrestrial infrastructure and the multibeam space relay;
- an access module (308) for accessing the space network composed of the multibeam space relay and the ground station, said access module being embedded on board the multibeam space relay when the multibeam space relay is regenerative or embedded in the ground station GW when the multibeam space relay is transparent,
- at least one user space terminal (6; 106; 306),
the terminal (6; 106; 306) being configured to, in a first step, emit at a given time T on a random uplink UL data channel and in a predetermined span of frequencies to the space network access module one or more bursts of data predominantly on useful traffic, including an identifier and, when the terminal is able to determine or to aid in its geo-location, explicit or implicit information regarding the geographical location of said terminal;
the space network access module (308) is configured to:
- in a second step subsequent to the first step, receive and decode the burst or bursts of data emitted by the terminal, associate with the terminal a logical beam (354; 384) on the basis of location information of said terminal provided in the first step when the terminal is able to determine or to aid in its geo-location or derived from the received signal carrying the burst or bursts of data emitted when the terminal is not able to determine or to aid in its geo-location, the associated logical beam (354; 384) being a predetermined fixed geographical area in which the terminal lies at the given time T and which belongs to a tiling of the geographical coverage of the multibeam telecommunications space system into a set of distinct geographical areas, which are devoid of any mutual overlap and each form a different logical beam, and
associate, in real time, with the associated logical beam a plurality of one or more physical emission beams of the space relay which, at the given time T, overlap the entirety of said associated logical beam; then
- in a third step, send to the terminal, through a broadcasting beacon whose carrier frequency the terminal already knows, an identifier of a downlink DL data channel carrier allocated to the terminal, to its associated logical beam and to the plurality of physical beams associated in real time with said logical beam, to allow the terminal to receive and decode useful and control data which are intended for it.

18. The multibeam telecommunications space system according to claim 17, wherein
the space network access module (308) is configured to, in the third step, allocate a down-channel DL unique carrier to the logical beam in which the terminal lies, and/or
the terminal is configured to, in a fourth step executed after the third step, perform the acquisition of the carrier of the downlink DL data channel according to the carrier frequency identifier which was transmitted to it and start listening for possible bursts transmitted on this DL carrier which are possibly intended for it; then
- the space network access module (308) is configured to, in a fifth step subsequent to the fourth step, send to the terminal through the downlink DL data channel, at the carrier frequency of the logical beam with which the terminal is associated, one or more bursts of useful data and/or of control data of the terminal and/or of data for signalling a new carrier, associated with the logical beam of attachment of the terminal, said sending being performed on the plurality of the physical emission beam or beams of the space relay which logically at the given time T overlap the entirety of and are associated with the logical beam of the terminal.

19. The multibeam telecommunications space system according to claim 18, wherein the control data relate to the implementation of some or of all of the following mechanisms:
- a mechanism of contention access control on the random uplink UL channel, including congestion control and stream control and taking into account the specific of a satellite-based or HAPS station-based communication channel, with selection of delays and selection of a mode of transmission as a function of the type of data to be transmitted;
- specific power control mechanism suited to the uplink UL communication channel;
- a Doppler drift control mechanism;
- an mechanism for saving electrical energy of the terminal based on the provision of a piece of temporal duty cycle information representative of a temporal sharing of one and the same downlink DL data channel carrier frequency by several logical beams served by one and the same satellite.

20. The multibeam telecommunications space system according to any one of claims 18 to 19, wherein
the terminal (6; 106; 306) is configured to, in a sixth step executed after the fifth step, send to the space network access module on the random uplink UL communication channel at an up-path carrier frequency one or more bursts of data as well as information relating to the location of said terminal at a new time T+1; and/or
- the space network access module (308) is configured to, in a prior step previous to first step, broadcast to the at least one terminal which lies in the global geographical coverage of the space relay and on a broadcasting beacon whose carrier frequency the at least one terminal already knows, on the one hand the frequency plan of the multibeam telecommunications space system containing a list of identifiers and of respectively associated frequencies of the carriers of uplinks and of downlinks, and possibly information for aiding in the localisation of the terminal or terminals.

21. The multibeam telecommunications space system according to any one of claims 17 to 19, wherein
the logical beam (354) is a simple, compact geographical area in one piece, or
the logical beam (384) is a finite discrete set of compact elementary geographical areas in one piece, distributed according to spacing distances between neighbouring areas that are predetermined, preferably in a cluster or several clusters.

22. The multibeam telecommunications space system according to any one of claims 17 to 21, wherein
the multibeam telecommunications space system is a multibeam satellite system (12) having a satellite or a constellation of several satellites, the satellite or satellites flying in geostationary orbits or low orbits or medium orbits.

23. An integrated telecommunications system comprising, integrated therein:
the multibeam telecommunications space system (12; 112) defined according to any one of claims 17 to 22; and
at least one, mobile and cellular, terrestrial system (14),
the terrestrial system comprising:
- integrated into one or two terrestrial ground station(s), a cellular terrestrial radiofrequency (RF) relay and an interconnection gateway between the terrestrial RF relay and the common fixed terrestrial infrastructure, shared with the multibeam telecommunications space system; and
- an access module (308) for accessing the terrestrial system, composed of the multibeam space relay and the one or two stations, said access module being included in the station or one of the two terrestrial stations, and
- - at least one user space terminal of the multibeam telecommunications space system, configured in dual-mode or multi-mode to communicate in the multibeam telecommunications space system and/or the terrestrial system;
the integrated telecommunications system wherein:
- the space network access module (308) is configured to, in a prior step, broadcast to the at least one user space terminal which lies in the global geographical coverage of the multibeam space relay on the one hand the frequency plan of the multibeam telecommunications space system containing a list of identifiers and of respectively associated frequencies of the carriers of uplinks and of downlinks;
- the at least one user space terminal (6; 106) is configured to:
- in a scan launch and execution step executed after the prior step, scan the broadcasting beacons of the terrestrial system and/or of the multibeam telecommunications space system according to a predetermined scanning algorithm, and provide an indication of a mode of new connection, taken from among connection to the terrestrial system and to the space system, and to be selected, this indication being dependent on the respective availabilities of the terrestrial system and the multibeam telecommunications space system and on a selection strategy based on priorities of a system from among the terrestrial system and the space system, then
.^{∗} in a validation step, validate the indication of the mode of connection to be selected; thereafter
.^{∗} in a step of selecting the communication system, connect to the terrestrial system when the terrestrial mode is selected, and connect to the satellite system when the satellite mode is selected, by executing the set of the first and second steps defined in claim 1 or the set of the first, second, third, fourth and fifth steps defined in claims 1 to 6.

24. An module (308) for accessing a space system, integrated into a space relay or into a ground station GW serving as gateway between the space system and a fixed terrestrial infrastructure, said access module being configured to:
- decode one or more bursts of data emitted by a terminal, and associate with the terminal a logical beam (354; 384) on the basis of information regarding the location of said terminal, which have been provided beforehand, the associated logical beam (354; 384) being a predetermined fixed geographical area in which the terminal lies at a given time T, and which belongs to a tiling of the geographical coverage of the space system into a set of distinct geographical areas, which are devoid of any mutual overlap and each form a different logical beam, the access module being further configured to:
- associate in real time with the associated logical beam a plurality of one or more physical emission beams of the space relay which, at the given time T, overlap the entirety of said logical beam; then
- send to the terminal, through a broadcasting beacon whose carrier frequency the terminal already knows, an identifier of a downlink DL data channel carrier allocated to the terminal, to its associated logical beam and to the plurality of physical beams associated in real time with said logical beam, to allow the terminal to receive and decode useful and control data which are intended for it.

25. The module for accessing the space system according to claim 24, wherein
the space network access module (308) is configured to send to the terminal, through the downlink DL data channel, at the carrier frequency of the logical beam with which the terminal is associated, one or more bursts of useful data and/or of control data of the terminal and/or of data for signalling a new carrier, associated with the logical beam of attachment of the terminal, said sending being performed on the plurality of the physical emission beam or beams of the space relay which logically at the given time T overlap the entirety of and are associated with the logical beam of the terminal.
